# FASCICULE DE BREVET EUROPEEN

(11) **EP 0 527 203 B1**
(45) Date de publication et mention de la délivrance du brevet: **21.09.1994**
(21) Numéro de dépôt: 91909742.8
(22) Date de dépôt: 03.05.1991
(51) Int. Cl.: G07F 7/10, G06K 19/06

(54) **PROCEDE ET DISPOSITIF DE TRANSACTION ENTRE UN PREMIER ET AU MOINS UN DEUXIEME SUPPORTS DE DONNEES ET SUPPORT A CETTE FIN**
VORRICHTUNG UND VERFAHREN ZUM DURCHFÜHREN VON TRANSAKTIONEN ZWISCHEN EINEM ERSTEN UND MINDESTENS EINEM ZWEITEN DATENTRÄGER UND DAZUGEHÖRIGE DATENTRÄGER
PROCESS AND DEVICE FOR EFFECTING A TRANSACTION BETWEEN A FIRST AND AT LEAST ONE SECOND DATA MEDIUM AND MEDIUM USED FOR THIS PURPOSE

(30) Priorité: 03.05.1990 FR 9005562
(43) Date de publication de la demande: 17.02.1993
(73) Titulaire: STORCK, Jean-René, 06600 Antibes (FR)
(72) Inventeur: STORCK, Jean, René, F-06250 Mougins (FR); COMBALUZIER, Pierre, Michel, F-06220 Vallauris (FR)
(74) Mandataire: Bonneau, Gérard
(86) Numéro de dépôt international: FR9100373
(87) Numéro de publication internationale: WO9117528

(56) Documents cités:
- EP-A- 0 049 650
- EP-A- 0 329 497
- EP-A- 0 355 372
- WO-A-83/03018
- FR-A- 2 604 275
- US-A- 4 529 870
- US-A- 4 625 276
- PATENT ABSTRACTS OF JAPAN, vol. 10, No. 206 (P-478)(2262) 18 July 1986, & JP-A- 48086 (OMRON TATEISI ELECTRONICS) 08 March 1986

## Description

La présente invention concerne un procédé de transaction entre un premier circuit comportant au moins des moyens de mémoire, des moyens de gestion de cette mémoire et des moyens de traitement de données, et au moins un deuxième support de données comportant au moins les étapes de mise en relation desdits supports, de lecture dudit premier support, d'identification de la compatibilité du premier support avec le deuxième support et de transfert de données de l'un des supports sur l'autre pendant une transaction entre lesdits premier et deuxième supports à travers un circuit d'interfaçage. Plus particulièrement, l'invention concerne des transactions dans le domaine des cartes à mémoire, couramment appelées "cartes à puce" ou "smart card", également appelées cartes à microcircuit. L'invention se rapporte également à des dispositifs et à des accessoires pour mettre en oeuvre le procédé selon l'invention. Elle porte également sur un support enfichable à microcircuit permettant la mise en oeuvre dudit procédé.

Depuis les années soixante dix, date des premiers dépôts de brevets, la carte à mémoire a connu un très grand succès et une très large diffusion, accompagnée d'une évolution parallèle de ses capacités techniques et de ses applications potentielles.

Dans la suite, on utilisera l'expression "carte à microcircuit", de préférence aux termes "carte à mémoire", "carte à puce" ou "carte à microprocesseur" employés couramment pour caractériser le méme objet. Une carte à microcircuit peut se définir de façon très générale comme un dispositif portatif d'acquisition et de stockage d'informations et/ou données possédant sa propre intelligence et des moyens d'identification et de protection. Les cartes dont il est question ici sont définies, au moins en ce qui concerne leur format, par la norme ISO 7810 spécifiant la structure physique d'un type de carte généralement appelée carte de crédit. Une autre norme, ISO 7811 cette fois, définit, entre autres, la position des pistes magnétiques employées couramment dans le domaine des cartes dites "mixtes", notamment celles destinées à des applications bancaires. A la suite des recommandations de l'AFNOR (Association Française de Normalisation), l'ISO a émis un "Draft International Standard" - DIS 7016 qui définit non seulement les caractéristiques physiques de la carte telles que celles de la norme ISO 7810, mais également le profil de surface des contacts du microcircuit, ainsi que de nombreux autres paramètres concernant essentiellement la fiabilité et la résistance du microcircuit. Cette norme provisoire fixe également la plupart des paramètres électriques du microcircuit, notamment les signaux et les protocoles d'échange, les fonctions d'initialisation, et les formats et normes de transmission, alors qu'un choix définitif entre la transmission synchrone et la transmission asynchrone n'est pas encore décidé.

Toujours en matière de normes, trois possibilités de positionnement du microcircuit sur le support sont couramment admises, une position en haut à gauche, choisie initialement par l'AFNOR, une position en bas à gauche qui deviendra la norme en France à partir de 1990, et une position médiane à gauche préférée par l'ISO.

On distingue d'abord les cartes "passives" qui constituent le type de carte couramment utilisé à présent et sont, en quelque sorte, "un support portatif d'informations ou données". Elles nécessitent l'utilisation d'un terminal de lecture/écriture afin d'exploiter les données qu'elles contiennent. On distingue ensuite une nouvelle génération de cartes dites "actives" qui incorporent leur propre source d'alimentation, leur propre affichage et leur propre clavier, l'épaisseur très réduite de la pile d'alimentation, rendue nécessaire par les besoins de conformité aux normes ISO, freinant actuellement la diffusion d'une telle carte. Bien qu'orientée vers les cartes "passives" disponibles actuellement, les moyens mis en oeuvre dans la présente invention sont tout à fait capables de traiter indifféremment des cartes "passives" et des cartes "actives".

Comme support portatif de données, la carte à microcircuit a connu une multiplication presque explosive de ses applications, en commençant par les secteurs traditionnels qui sont la monétique et surtout les applications bancaires, puis comme carte de télécommunications, pour atteindre des applications aussi variées que les tickets de transport en commun ou de cinéma, les supports de stockage de dossiers médicaux personnels, les moyens d'identification de véhicules, les parcmètres portatifs, pour ne mentionner que certains des applications courantes de la carte à microcircuit.

Parallèlement, et en suivant les développements généraux dans les domaines des mémoires et de l'intégration des circuits, les capacités de stockage des mémoires de la carte à microcircuit ont connu une croissance presque exponentielle en partant des 2 Koctets d'origine jusqu'au 64 Koctets d'il y a quelques années pour atteindre, avec l'adjonction d'une mémoire de masse sous le microcircuit, des capacités actuelles de plus de 100 Koctets et jusqu'à 800 Koctets avec certaines techniques de mémoire de masse réalisables actuellement. La technologie employée a suivie une évolution parallèle, en partant des mémoires EPROM (erasable programmable read only memory) jusqu'aux mémoires EEPROM (electrically erasable programmable read only memory) en combinaison avec l'utilisation généralisée des techniques CMOS ou même HCMOS de nos jours.

Finalement, la question de sécurité des données stockées dans la carte, et pendant la transmission de celles-ci sur un réseau de télécommunications, constitue une préoccupation majeure des fournisseurs de cartes. Cette préoccupation a eu pour résultat des efforts offrant une sécurité tout à fait remarquable des données, par rapport à d'autres moyens de stockage. Ainsi, la séparation de la mémoire, généralement en au moins trois zones: une zone ouverte, une zone confidentielle, et une zone secrète au moins, ainsi que de nombreuses autres techniques telles que la personnalisation codée des zones de mémoire, les possibilités d'accès sélectifs à des informations spécifiques en mettant en oeuvre des paliers de reconnaissance, l'utilisation de codes multiples de reconnaissance, le mouvement cyclique ou inter-zone des informations, ainsi que le transport sécurisé ou encripté des informations pendant leurs transmission sur un réseau de télécommunication ont conduit à des résultats, et à des possibilités, tout à fait remarquables. On peut noter, cependant, que la position dominante des groupements bancaires en tant que distributeurs actuels de la carte à microcircuit, et leurs préférence pour un produit d'une sécurité irréprochable, mais néanmoins de fonctionnalité relativement réduite, constitue actuellement un frein au développement des applications potentielles de la carte à microcircuit.

La pleine utilisation des possibilités de la carte à microcircuit est également freinée par le type de matériel avec lequel elle est utilisé actuellement, les fabricants proposant soit des matériels complexes et très chers tels que les distributeurs de billets de banque et les serveurs associés, soit un petit matériel relativement simple pour utilisation, par exemple, comme terminal de point de vente. Ce dernier est dédié à une application spécifique et est tout à fait incapable de suivre les évolutions des possibilités actuellement disponibles de la carte à microcircuit, et plus encore les évolutions futures qui sont susceptibles de suivre une courbe de développement exponentielle, au moins dans les dix ans à venir. En bref, la carte à microcircuit, dans son rôle de support portatif de données combiné à un excellent niveau de protection et utilisée en combinaison avec des serveurs d'une très grande complexité et d'un prix élevé, dans des configurations relativement figées, n'utilise pas les possibilités actuelles de la carte à microcircuit et de sa propre intelligence, cette sous-utilisation risquant de devenir encore plus prononcée dans les quelques années à venir.

WO-A-8303018 (notamment page 5 ligne 12 à page 11 ligne 6); EP-A-0 049 650 (notamment page 33 ligne 15 à page 39 ligne 6 et revendications 9 à 13) et JP-A-61 48086 constitue l'état de la technique en la matière. En effet, ils concernent des systèmes comportant plusieurs moyens dont des moyens de traitement de l'information, des moyens de dialogue, des moyens de traitement de l'information, des moyens de réalisation de l'opération et un support.

WO-A-8303018 concerne un dispositif permettant d'améliorer la sécurité des transactions monétaires entre, par exemple, un commerçant et un client dans un système traditionnelle de point de vente, dans lequel le système interroge l'utilisateur sur une caractéristique d'identification choisie, de préférence, de façon aléatoire.

EP-A-0 049 650 décrit, dans un système de distribution d'objets, tels que des billets de banque, des moyens permettant d'améliorer la sécurité des transactions, et notamment, l'utilisation simultanée d'un premier support amovible conversant avec des moyens de traitement de l'information et d'un deuxième support amovible, ce dernier jouant le rôle d'une carte d'habilitation du premier support amovible.

JP-A-61 48086 décrit, en effet, un connecteur permettant le transfert de données entre une carte maître et une carte esclave, l'unité centrale de traitement du connecteur étant apte à déterminer laquelle des deux cartes est la carte maître.

Dans la présente description et dans les revendications auxquelles elle donne lieu, par "données", on entend principalement des données numériques, étant entendu cependant que l'on ne saurait se limiter à cet aspect et que ce terme couvre également les applications analogiques et donc des données analogiques.

De plus par données, on entend des informations susceptibles d'être transférées ou acquises autant que des informations susceptibles d'être copiées.

L'un des objets de la présente invention est donc de permettre la pleine utilisation des multiples possibilités de la carte à microcircuit.

Un autre but de l'invention est de permettre l'incorporation de l'intelligence d'un serveur relativement complexe dans la carte à microcircuit elle-même.

Un des buts principaux de l'invention est également de permettre à une ou plusieurs cartes à microcircuit de converser entre elles.

Un autre but de l'invention est de permettre la pleine utilisation des possibilités de la carte à microcircuit pendant des communications avec un autre système tel qu'un terminal télématique, un micro-ordinateur ou n'importe quel autre système de traitement de données.

Un des principaux buts de l'invention est également de permettre la délégation de certaines des données stockées dans la mémoire d'une carte à microcircuit à une autre carte à microcircuit.

Un autre but de l'invention est de réaliser un matériel très simple permettant la communication entre deux ou plusieurs cartes à microcircuit tout en restant relativement transparent pendant cette communication.

Un autre but encore de l'invention est de proposer un matériel capable de suivre l'évolution des possibilités et des fonctionnalités des cartes à microcircuit sans modification, et ceci sans limite.

L'invention a encore pour but de permettre de réaliser des cartes à microcircuit fortement personnalisées par délégation à partir d'une ou plusieurs cartes maîtres.

Un autre but de l'invention est de proposer des modalités de mise en oeuvre d'un système de paiement instantané sans utilisation d'argent liquide par le transfert de jetons représentatifs d'une valeur fiduciaire de la carte d'un débiteur vers la carte d'un créditeur.

Un but important de l'invention consiste à proposer un connecteur intelligent capable de se faire reconnaître par, et de reconnaître, d'autres éléments intelligents participant à un système de type modulaire.

Encore un autre but de l'invention est de proposer un matériel de poche capable de réaliser, d'une façon extrêmement simple, des transactions entre deux ou plusieurs cartes à microcircuit.

Encore un autre but de l'invention consiste à réaliser un matériel capable d'être connecté à un réseau portant des données susceptibles d'intervenir dans une transaction entre deux cartes à microcircuit.

Un autre but encore de l'invention est de proposer une gamme de produits intelligents capables d'être interconnectés de façon modulaire de façon illimitée.

Un autre but de l'invention consiste à réaliser un matériel standard de conception simple ayant pour unique fonction de permettre l'accès aux zones autorisées de cartes à microcircuit, le système recevant son intelligence d'une ou plusieurs cartes à microcircuit qui lui sont raccordées.

L'invention a également pour but, finalement, de réaliser toute une gamme d'accessoires intelligents capables d'être intégrés dans un système modulaire pour de multiples applications telles que la domotique.

L'invention a en outre pour avantage de permettre la lecture par le titulaire ou possesseur de la carte des données qu'elle contient.
Bien entendu, ceci peut impliquer que ces informations ne puissent être lues qu'après que le code secret du titulaire ait été entré. Toute autre opération effectuée à l'aide de la carte peut impliquer que le code du titulaire soit introduit.

Ces buts et d'autres buts encore sont réalisés par un procédé de transaction entre au moins un premier support de données enfichable à microcircuit, ce support étant du type couramment appelé carte à mémoire ou à microprocesseur, et au moins un deuxième support de données, comportant au moins les étapes de mise en relation desdits supports, de lecture dudit premier support, d'identification de la compatibilité du premier support avec le deuxième support et de transfert de données de l'un des supports sur l'autre pendant une transaction entre lesdits premier et deuxième supports à travers un circuit d'interfaçage, caractérisé en ce que l'on utilise en tant que premier support de données un support à microcircuit qui contient toutes les données d'identification, de commande et de gestion dudit circuit d'interfaçage et de ladite transaction.

Selon un mode de réalisation du procédé de l'invention, on utilise, comme deuxième support de données, un support également en forme d'élément enfichable à microcircuit, ce support étant habilité à recevoir des données lors d'une transaction uniquement dans le cas ou ledit premier support est habilité à lui envoyer des données, et les données transférées pouvant être limitées par une autorisation définie.

Selon un autre mode de réalisation du procédé de l'invention, on utilise, comme deuxième support de données, un support capable d'être mis en correspondance avec ledit circuit d'interfaçage et qui fait partie d'un système indépendant dudit circuit d'interfaçage.
Ainsi, par exemple, le système indépendant peut être un terminal télématique en relation avec des moyens, par exemple un autre terminal télématique, situé à distance avec lequel un autre support enfichable à microcircuit selon l'invention peut être en relation.

Selon encore un autre mode de réalisation du procédé de l'invention, on utilise, en tant que circuit d'interfaçage, un moyen de communication commandé par des moyens à logique câblée, et que l'on pilote lesdits moyens à logique câblée exclusivement par les informations du programme de base stockées dans ledit premier support et qu'on limite les fonctions dudit circuit d'interfaçage à l'accès aux zones de données desdits microcircuits, ledit accès étant autorisé par les moyens d'identification de la compatibilité du premier support.

Suivant une forme de réalisation du procédé de l'invention, on programme le premier support de façon à pouvoir transférer une partie au moins des données autorisées vers ledit deuxième support et que l'on conditionne ce transfert en fonction des choix imposés soit par un opérateur humain, soit par au moins un élément de validation participant dans ladite transaction, ou une combinaison des deux, l'existence et l'étendue desdits choix étant déterminés par ledit premier support.

Suivant une autre forme de réalisation du procédé de l'invention, on conditionne ladite transaction par des signaux externes auxdits premier et deuxième supports et ledit circuit d'interfaçage, la possibilité d'un tel conditionnement étant déterminée par les informations du programme de base stockées dans ledit premier support.

Suivant encore une autre forme de réalisation du procédé de l'invention, ledit premier support établit un compte-rendu de chaque transaction à laquelle il intervient.

Suivant une autre forme encore de réalisation du procédé de l'invention, on utilise, comme deuxième support, un support enfichable à microcircuit habilité à recevoir des données à partir d'au moins un premier support, et apte à sécuriser les données qu'il a ainsi reçu et à pouvoir transférer ou déléguer, à son tour, une partie des données qu'il contient, cette délégation étant toujours sous l'autorisation des données transférées initialement dudit premier support et pouvant être éventuellement sous le contrôle d'un opérateur humain et/ou la présence ou l'absence de signaux de validation, les possibilités dudit contrôle étant également déterminées par les données transférées initialement.
Par "délégation", on entend la possibilité que possède une première carte à microcircuit d'affecter partiellement ses autorisations, ses fonctions et ses données à une deuxième carte à microcircuit, ou dans des cas exceptionnels, la totalité de ses autorisations, de ses fonctions et de ses données. Par exemple, un débiteur dans une transaction commerciale peut déléguer, à partir de sa carte chargée d'un certain nombre de jetons, une partie de ses jetons à la carte d'un créditeur, la "valeur" de cette deuxième carte s'augmentant immédiatement du montant de la somme concernée et la "valeur" de la première carte étant simultanément réduite. Cette deuxième carte peut, à son tour, déléguer une partie de la somme ainsi transférée à une troisième carte, et ainsi de suite, des paiements instantanés étant réalisés dans chaque cas sans l'intervention d'argent liquide.

Suivant une forme encore de réalisation du procédé de l'invention, celui-ci comprend les étapes de:
- établir un contact électrique direct ou indirect avec les terminaux du microcircuit dudit premier support enfichable à microcircuit,
- établir un contact électrique direct ou indirect avec les terminaux du microcircuit d'au moins un deuxième support enfichable à microcircuit, afin d'établir une liaison, à travers ledit circuit d'interfaçage, entre lesdits premier et deuxième microcircuits,
- initier le déroulement d'un algorithme d'identification et d'accès dudit premier microcircuit,
- initier le déroulement d'un algorithme d'identification et d'accès dudit deuxième microcircuit,
- transférer des données résultant desdits déroulements vers ledit circuit d'interfaçage,
- comparer, dans ledit circuit d'interfaçage, les résultats desdits déroulements par une méthode déterminée par ledit premier support enfichable à microcircuit,
- établir si une transaction est possible à partir du résultat de ladite comparaison,
- dans le cas où la transaction est reconnue comme possible pour ces deux partenaires, d'envoyer d'éventuels signaux d'activation d'un moyen d'intervention humaine dans ladite transaction à partir dudit premier support enfichable à microcircuit vers ledit circuit d'interfaçage afin de piloter des moyens de communication avec un opérateur humain,
- effectuer un transfert de données toujours sur la commande dudit premier microcircuit entre les deux microcircuits des supports, ledit circuit d'interfaçage n'intervenant dans la transaction qu'en tant qu'interface entre lesdits supports et en tant que moyens de communication bi-directionnelle avec un opérateur humain ou une autre source de signaux connectée audit circuit d'interfaçage.

L'invention a en outre pour objet un support enfichable à microcircuit comportant une pluralité de zones mémoires dédiées comprenant au moins une zone à accès interdit, une zone à données accessibles, une zone d'identification et une zone de transaction, ledit support comprenant une zone de commande et de pilotage d'un circuit d'interfaçage copiable à partir dudit support sur un autre support avec lequel il est compatible et une zone de données d'information susceptibles d'être copiées par ouverture de la carte par délégation.
Cette délégation peut être automatique ou bien assistée.

Selon une forme de réalisation, ledit support comporte une zone confidentielle à accès par paliers codifiés.

Selon une autre forme de réalisation, ledit support comporte une zone de données d'information susceptibles d'être transférées ou acquises.

Selon une autre forme encore de réalisation, ledit support comporte une zone de données de programme copiables dudit support vers un autre support avec lequel il est compatible.

Selon encore une autre forme de réalisation, ledit support comporte une zone de données de programme transférables dudit support vers un autre support avec lequel il est compatible.

L'invention concerne également un dispositif permettant la réalisation d'une transaction entre au moins un premier support enfichable à microcircuit et un deuxième support, caractérisé en qu'il comporte des moyens d'établissement d'un contact électrique direct ou indirect avec un premier support enfichable à microcircuit et au moins un deuxième support enfichable à microcircuit, des moyens d'alimentation électrique dudit premier support et dudit deuxième support, des moyens de réception des signaux d'identification émis par ledit premier support et ledit deuxième support, et des moyens permettant d'effectuer, entièrement sous la commande globale dudit premier support, un transfert de données de l'un desdits supports vers l'autre support.

Selon une forme d'exécution, le dispositif suivant l'invention comporte un moyen de visualisation pour l'affichage d'éléments d'information relatifs à ladite transaction et/ou un moyen permettant à un opérateur humain d'intervenir dans ladite transaction selon des options qui lui sont proposées.

Selon une autre forme d'exécution du dispositif de l'invention, les éléments composants ledit affichage sont générés à partir de données-stockées dans l'un des supports à microcircuit enfichés dans le dispositif.

Selon une autre forme encore d'exécution, le dispositif suivant l'invention comporte un écran à cristaux liquides susceptible d'être activé et alimenté en informations par les données stockées dans l'un des supports à microcircuit.

Selon encore une forme d'exécution de l'invention, le dispositif comporte un clavier consistant en un écran tactile ou sensible au toucher, ledit clavier étant généré sur ledit affichage au moyen d'informations stockées dans ledit support à microcircuit et ainsi apte à afficher des symboles ou des caractères alphanumériques générés par au moins l'un desdits supports enfichables à microcircuit.

Selon une autre forme encore d'exécution du dispositif selon l'invention, ledit clavier est un clavier externe capable d'être raccordé audit dispositif au moyen d'un connecteur.

Le dispositif selon l'invention peut comporter un moyen de lecture de carte magnétique.

D'autres buts, caractéristiques et avantages apparaîtront à la lecture de la description de divers modes de réalisation de l'invention, faite à titre non limitatif et en regard du dessin annexé, où:
- la figure 1 représente une vue schématique d'un dispositif électronique de transaction de poche selon un premier mode de réalisation de l'invention;
- la figure 2 est un schéma synoptique représentant les principaux blocs fonctionnels du dispositif selon la figure 1;
- la figure 3 illustre, de façon très schématisée, une transaction entre une première carte à microcircuit et une deuxième carte à microcircuit, réalisée par le dispositif selon la figure 1;
- la figure 4 représente un clavier pour un matériel informatique muni de plusieurs lecteurs de cartes à microcircuit;
- la figure 5 représente une interface, équipée de moyens de lecture de cartes à microcircuit, entre un clavier standard et un matériel informatique;
- la figure 6 illustre une réalisation particulièrement compacte d'un dispositif selon l'invention incorporant un accessoire périphérique;
- la figure 7 est une vue en plan du dispositif selon la figure 6 avec le couvercle enlevé;
- la figure 8 représente un coupleur conçu pour raccorder plusieurs dispositifs selon l'invention;
- la figure 9 représente en élévation et en perspective une variante de réalisation du dispositif selon l'invention, destinée à être installée en armoire fixe;
- la figure 10 est une vue en perspective de dessous du dispositif représenté à la figure 9;
- la figure 11 représente un clavier en forme de carte de crédit utilisable avec n'importe lequel des dispositifs selon l'invention;
- la figure 12 représente un connecteur intelligent universel destiné à être utilisé avec les dispositifs selon l'invention et susceptible de recevoir un complément d'intelligence, programmé ou similaire;
- la figure 13 représente un dispositif similaire à celui de la figure 12, apte à recevoir une carte ou une fiche mâle;
- la figure 14 illustre un accessoire susceptible d'être installé sur n'importe lequel des dispositifs selon l'invention et constituant un émetteur/récepteur infrarouge;
- la figure 15 illustre un accessoire similaire à celui de la figure 14 mais à émission et réception par fréquence radioélectrique;
- la figure 16 illustre un périphérique susceptible d'être connecté, par le connecteur de la figure 12, à un dispositif tel que celui de la figure 1, et constituant un analyseur pour entrer en contact direct avec des micro-circuits;
- la figure 17 illustre un guide ou canon de centrage permettant un bon centrage de la pointe de touche de l'analyseur représenté à la figure 16;
- la figure 18 représente un premier type d'organe de commande destiné à être utilisé avec un dispositif tel que celui représenté à la figure 9 et du type à effleurement;
- la figure 19 illustre un organe de commande similaire à celui de la figure 18 et utilisant une détection de présence;
- la figure 20 représente un accessoire utilisable avec des dispositifs selon l'invention, cet accessoire constituant un connecteur susceptible de connecter des appareils de surveillance tels que des appareils médicaux;
- la figure 21 illustre la structure modulaire d'un système incorporant plusieurs accessoires selon l'invention;
- la figure 22 représente le dispositif selon la figure 1 équipé d'un écran tactile et d'un capteur extérieur facultatif permettant la lecture des microcircuits en conformité avec une autre norme ou d'un autre appareil;
- la figure 23 représente un connecteur universel multiple à interfaces comportant, en option, un connecteur avec rainure de glissement permettant la lecture de cartes à pistes magnétiques.

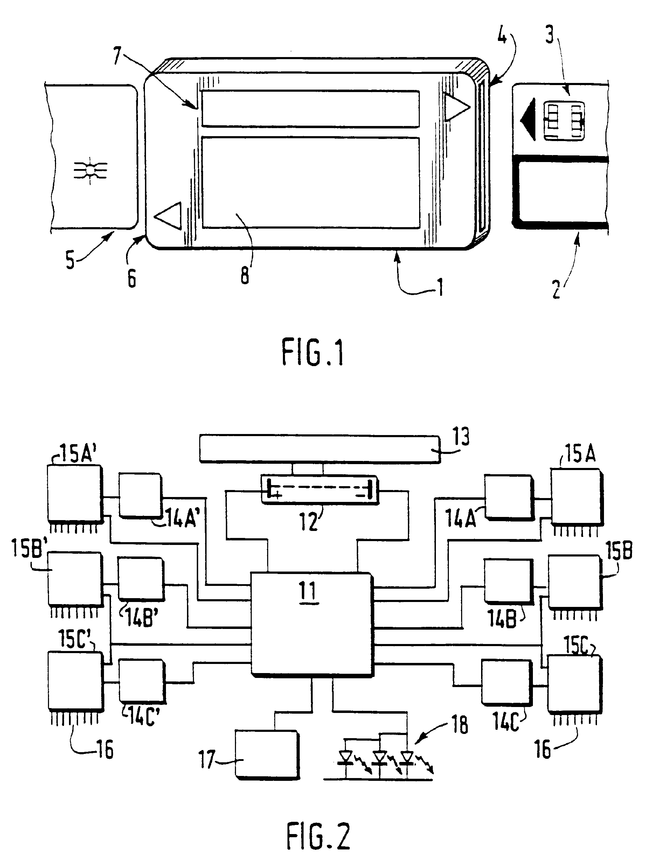

En se référant à la figure 1, on va décrire en détail un premier mode de réalisation, illustrant quelques principes fondamentaux de l'invention.

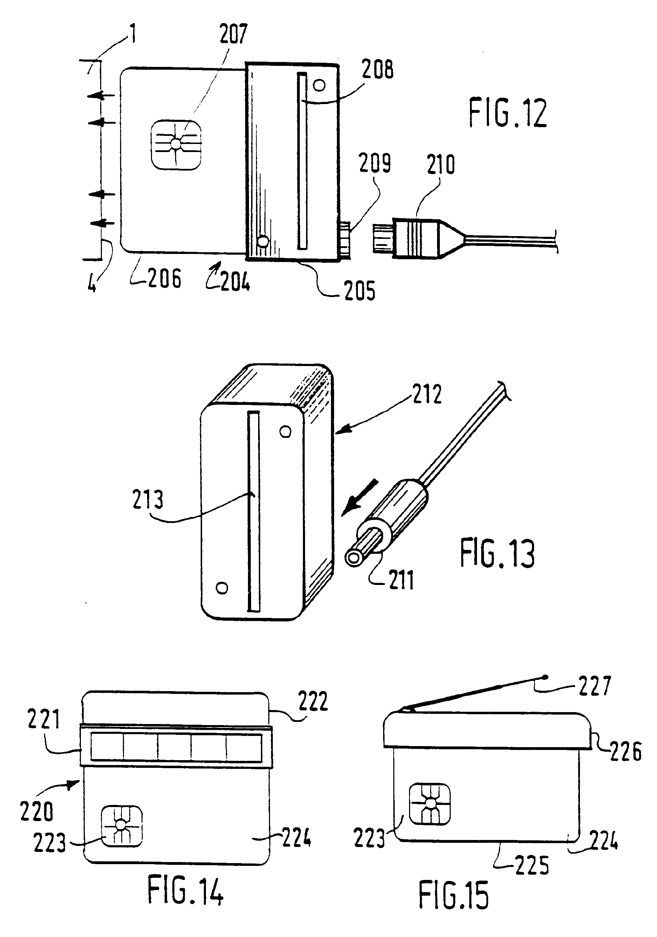

Le dispositif représenté à la figure 1 et doté généralement de la référence 1, prend la forme d'un petit appareil de format similaire à celui d'une calculette de poche. L'appareil est conçu pour recevoir deux supports enfichables à microcircuit 2 et 5, de format normalisé, et correspondant sensiblement au format d'une carte de crédit, l'un des supports ou cartes à microcircuit pouvant être l'un des accessoires tels que ceux illustrés sur la figure 12, 14, 15 ou 20, à titre d'exemple. Les cartes sont insérées latéralement à droite et à gauche, ou en haut et en bas du boîtier de l'appareil 1 dans une fente ou lumière d'introduction 4 et 6, où elles sont guidées, maintenues et verrouillées par des moyens qui ne sont pas représentés sur la figure. Le dispositif est parfaitement symétrique, les cartes pouvant être enfichées indifféremment dans l'une ou l'autre des deux fentes.

L'appareil possède des moyens, également non représentés sur la figure, d'établissement d'un contact électrique, généralement direct, mais pouvant également être indirect; en d'autres termes, le contact peut se faire par couplage électromagnétique ou capacitif, avec les microcircuits, tel que celui illustré en 3 sur la carte de droite de la figure 1. Dans la version considérée ici, les fentes 4, 6 peuvent recevoir, et les contacts électriques peuvent accepter, des cartes aux normes AFNOR avec la "puce" en haut ou en bas, ou selon la norme ISO avec la "puce" située en position médiane. En variante, l'appareil peut également recevoir des cartes comportant des pistes magnétiques, dans une fente à glissière conçue spécialement pour cette fonction.

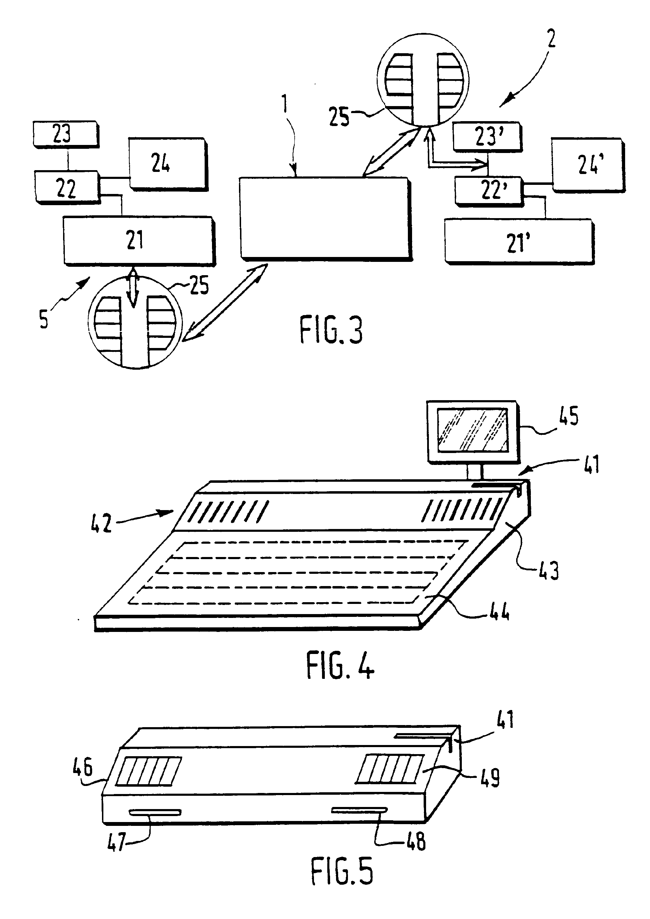

La carte, ainsi que ses contacts et ses interfaces avec le monde extérieur, sont, comme il a été dit, soit normalisés, soit en cours de normalisation, et malgré l'augmentation considérable des capacités de mémoire envisagées pour certaines applications de la présente invention, ces contacts et leurs spécifications électriques constituent, au moins "de facto", des normes. Malgré la croissance envisagée des capacités de mémoire et de traitement de la puce incorporée dans de telles cartes, sa structure de base, ainsi que ses interfaces électriques, qui sont illustrés par la figure 3, sont susceptibles d'être respectés pendant une période relativement longue.

La structure d'un microcircuit, en l'occurrence celle de l'actuelle carte bancaire à "puce" est illustrée sur la figure 3. I1 est évident que si une telle carte bancaire était introduite dans l'appareil avec l'intention de réaliser une transaction à partir de l'information contenue dans la "puce", cette transaction serait refusée, ce fait étant signalé à l'utilisateur au moyen, par exemple, de l'allumage de l'une des diodes électroluminescentes 18 de la figure 2 et par l'éjection de la carte, parce que cette carte ne serait pas munie du logiciel permettant, entre autres, le fonctionnement du dispositif 1. Ceci illustre un aspect fondamental de l'invention: la possibilité ou non d'utiliser une carte comme carte maître dans le dispositif selon l'invention est entièrement déterminée par le fournisseur de cette carte "maître". De la même manière, c'est uniquement le fournisseur de la carte maître qui détermine quelles données sont susceptibles d'être transférées sur une autre carte, et quelles données ne le sont pas. Il est également évident que si une telle carte bancaire était introduite, par accident ou volontairement, dans l'appareil avec l'intention d'y transférer des données, cette transaction serait également refusée, et la carte éjectée, par exemple par relâchement des moyens de verrouillage, parce que la carte ne serait pas reconnue comme habilitée à recevoir des données suite au déroulement des algorithmes de vérification lancée par la carte maître, supposée valable et introduite dans l'autre fente de l'appareil.

La structure des cartes de la figure 3 a donc été adoptée uniquement à titre d'exemple de la structure générale d'un microcircuit, par exemple le microcircuit 3 de la figure 1, équipant des cartes susceptibles d'être utilisées dans le cadre de l'invention. Si l'on considère la carte de gauche 5, le microcircuit qu'elle comporte est composé d'une mémoire de données 21, généralement séparée en plusieurs zones, d'une unité arithmétique et logique 22, d'une mémoire de travail 23 et d'une mémoire programme 24. Certaines applications susceptibles d'être traitées par les moyens de l'invention envisagent un accroissement important des capacités actuelles des mémoires du microcircuit, notamment en ce qui concerne la mémoire de données 21. Le microcircuit communique avec le monde extérieur au moyen d'un connecteur 25, dont le profilé, comme il a été mentionné ci-dessus, est en cours de normalisation. On imagine que cet interface électrique sera maintenu malgré la forte argumentation des capacités du microcircuit. Actuellement, et toujours en référence à la figure 1, le rôle des contacts 1 et 2 n'est pas actuellement défini, mais les contacts sont généralement nécessaires pour les activités de reprogrammation. Le contact 3 constitue l'entrée/sortie série des données, le contact 4 reçoit un signal d'horloge, le contact 5 et le contact 8 reçoivent l'alimentation électrique du microcircuit, le contact 6 donne la possibilité d'initialiser ou de remettre à zéro le microcircuit et le contact 7 constitue un plan de masse. Comme il a été dit, le dispositif selon la figure 1 est équipé de moyens connus, non représentés sur la figure, pour établir un contact électrique fiable avec les microcircuits de chacune des cartes 2 ou 5.

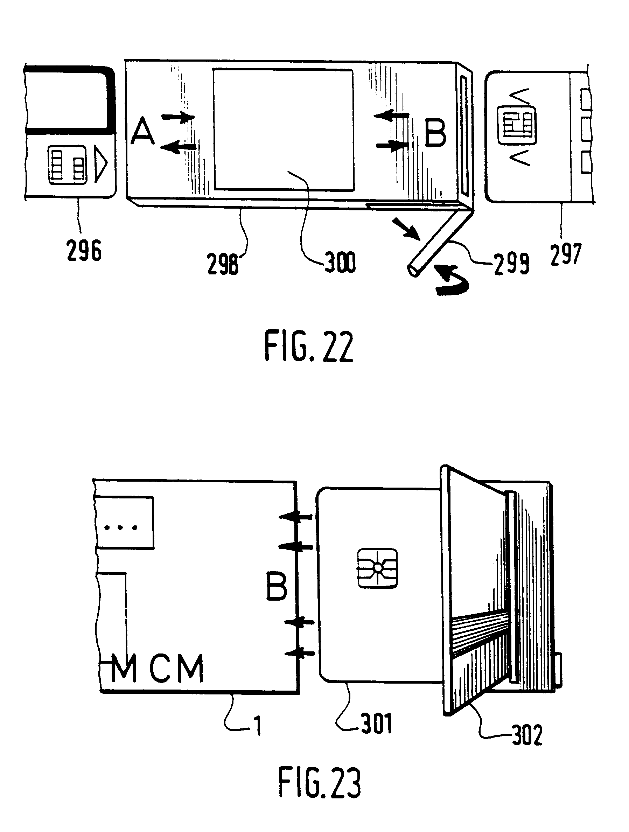

Le dispositif 1 comporte également sa propre alimentation à piles, notamment à piles au lithium, capable de fournir les 24 volts environ nécessaires en particulier pour des activités de programmation de l'une des cartes pendant un transfert de données. Le dispositif 1 peut également comporter un écran à cristaux liquides 7 permettant l'affichage de divers messages à l'intention de l'utilisateur, et également un clavier, à la position 8, pouvant adopter plusieurs formes telles que l'écran tactile illustré sur la figure 22. La position 8 peut cependant recevoir une ou plusieurs touches permettant simplement la validation d'une ou plusieurs options proposées à l'utilisateur.

La figure 2 illustre certains grands principes de l'organisation matérielle d'un dispositif tel que celui de la figure 1, dans lequel la référence 11 désigne un microcontrôleur programmé comportant un automate capable de reconnaître des signaux émis par les microcircuits des cartes, et celui des mémoires EPROM et EEPROM. Le microcontrôleur 11 est connecté à un circuit 13 de détection d'introduction d'une carte, ce qui met en route l'alimentation 12.

Disposé de façon symétrique et correspondant à chacune des fentes 4 et 6 de la figure 1, le dispositif comporte des moyens 15a, 15b, 15c; 15a′, 15b′, 15c′ équipés de contacts 16 aptes à établir l'interface électrique et transactionnelle entre chacune des cartes 3 et 5. Les trois interfaces 15a, 15b, 15c; 15a′, 15b′, 15c′ sont chacun susceptibles d'établir une relation entre toutes les cartes normalisées disponibles actuellement, notablement les cartes AFNOR avec le microcircuit en position basse, des cartes AFNOR avec le microcircuit en position haute et les cartes ISO avec le microcircuit en position médiane.

Entre chacun de ces interfaces 15, une mémoire RAM 15a, 15b, 15c; 15a′, 15b′, 15c′ réalisant une fonction de contrôle et d'identification, est reliée au microcontrôleur 11. Ce schéma simplifié utilise trois diodes électro-luminescentes 18 pour identifier les différentes étapes d'un transfert de données entre, par exemple, la carte 5 et la carte 2. Ces diodes représentent par exemple une incompatibilité entre les deux cartes par une lampe rouge, la séquence de lecture par l'illumination d'une diode électroluminescente de couleur jaune et le chargement par l'illumination d'une diode électroluminescente d'une autre couleur. Le dispositif comporte également un moyen 17 grâce auquel l'opérateur peut agir sur le transfert, par exemple pour le lancer.

Le fonctionnement de l'appareil illustré à titre d'exemple sur les figures 1 et 2 sera maintenant décrit.

L'introduction d'une carte dans l'une quelconque des fentes de l'appareil 1 selon la figure 1 met en route l'alimentation 12 de l'appareil, au moyen du détecteur 13 de carte. Le microcontrôleur 11 adresse un signal au microcircuit de la carte, pour le faire commencer à transférer son protocole d'accès dans la mémoire RAM, 15A′, 15B′ ou 15C′ auquel il est connecté. L'absence de transfert pourrait déclencher l'éjection de la carte. L'appareil attend l'introduction d'une carte dans l'autre fente, et au moment de cette introduction, le protocole d'accès contenu dans le microcircuit de cette deuxième carte sera chargé dans la mémoire RAM, 15A, 15B ou 15C, auquel ce circuit est connecté. La tâche du microcontrôleur 11 est limitée à une comparaison des données contenues dans les deux protocoles, les critères de compatibilité sont toujours déterminés par le microcircuit de la carte qui est "maître" des opérations au cours de la transaction envisagée; si les critères sont satisfaits, la "carte maître" constate que la transaction entre les deux cartes est possible. Le microcontrôleur se charge donc alors de l'établissement d'une liaison entre la sortie série de la première carte et l'entrée série de la deuxième carte, le processus de transfert lui-même étant sous la commande de la carte qui est "maître" de la transaction.

La figure 3 illustre, de façon très schématique, une transaction entre une première carte à microcircuit 5 qui constitue la carte maître et une carte à microcircuit 2 qui est destinée à recevoir une partie des informations contenues dans la carte 5. Il est à rappeler que le dispositif 1 sur la figure 3 est représenté sous la forme d'une "boîte noire" qui constitue l'intermédiaire entre la carte 5 et la carte 2 mais qui n'intervient dans la transaction qu'à titre de moyen d'interfaçage relativement transparent. Toute l'information concernant les données susceptibles d'être transférées, les options disponibles à l'utilisateur pendant la transaction, le procédé de sécurité mis en oeuvre dans une transaction, et, en bref, toute l'intelligence autorisant la transaction est contenue dans la carte maître 5, le dispositif 1, à part ses capacités de reconnaissance d'ordre matériel et d'adaptation, étant entièrement esclave, sous la commande de cette "carte maître" 5.

Le but de la transaction entre la carte 5 et la carte 2 est de transférer une partie bien définie des données contenues dans la mémoire de données 21 vers une ou plusieurs zones déterminées de la mémoire de la carte à microcircuit 2. Cette carte 2 peut être considérée comme étant "vierge", mais, en fait, la carte comporte déjà une programmation au moins sous forme d'un protocole d'habilitation à recevoir des données et à les ranger, éventuellement, d'une façon correcte. Les possibilités de délégation de la carte 5 sont programmées de façon inviolable dans cette carte maître 5. La carte peut éventuellement contenir une série d'options. L'utilisateur peut uniquement exercer un choix sur base de ces options éventuellement présentes et proposées par la programmation de la carte 5. Ces options sont affichées par le dispositif 1 et nécessitent simplement une validation d'une ou de plusieurs options de la part de l'utilisateur. A la fin de la transaction, la carte 2 est prête à être utilisée dans une installation correspondant à ses capacités et à ses fonctionnalités, les données qu'elle contient et les modes de sécurité mis en oeuvre ayant été définis d'origine par la carte maître 5. Bien entendu, une partie des données contenues dans la mémoire de données de la carte 2 pourrait être transférée à la carte 5. Un exemple d'utilisation de l'appareil 1 est de créditer la mémoire de données de la carte 2 d'une certaine somme d'argent dont est simultanément débitée la mémoire de données de la carte 5. Il s'agit là du transfert de données susceptibles d'être transférées de la carte 5 à la carte 2 avec élimination de ladite donnée initialement contenue dans la carte 5. Bien entendu, il est tout aussi bien possible de prévoir la transaction inverse, à savoir le transfert de données de la carte 2 à la mémoire de données de la carte 5. Une autre possibilité d'utilisation de l'appareil 1 est de permettre l'introduction par copie dans la mémoire de données de la carte 2 d'une donnée contenue dans la mémoire de données susceptibles d'être copiées de la carte 5.

Bien entendu, d'autres opérations que financières peuvent être prévues. Par exemple, la carte peut outre d'autres données contenir des données de commande d'une serrure, par exemple d'une serrure d'automobile, et également de la serrure de blocage du volant et de contact permettant la mise en route du moteur. Une telle donnée peut être stockée dans la mémoire sans pouvoir être copiée ou peut être copiée, par exemple, transférée par copie sur une autre carte à microcircuit, laquelle peut recevoir en outre une donnée d'information consistant en une commande de la limitation de la vitesse de rotation du moteur.

Une autre application de ce système pourrait consister à débiter d'une somme fixe toute carte qui serait introduite dans ledit appareil. Par exemple, une telle application pourrait être prévue pour le paiement de trajet effectué dans des transports en commun, la carte n'étant débitée que de la somme indiquée sur le compteur ou autre moyen.

Ces exemples sont donnés à titre illustratif et nullement limitatif.

Les figures 4 et 5 illustrent un autre mode de réalisation du dispositif selon l'invention capable de réaliser des transactions entre une ou plusieurs cartes introduites dans l'une des zones d'introduction, par exemple 42 ou 46, et une ou plusieurs cartes introduites dans l'autre zone d'introduction 43 ou 49. Ainsi, en partant d'une carte maître, il est possible d'attribuer simultanément à une ou plusieurs cartes dites cartes "servantes", un niveau d'autorisation et de le modifier à tout moment. Il est également possible de fractionner un niveau d'autorisation entre deux ou plusieurs cartes servantes qui seront ensuite utilisées soit de manière complémentaire, soit simultanément. Il est donc possible de créer, à partir d'une seule carte maître ou de plusieurs cartes maître, une pluralité de cartes servantes, ces cartes servantes étant à l'origine "vierges" comme défini ci dessus et étant enfichées dans la zone d'introduction 43 ou 49. Dans l'exemple considéré, chaque carte servante sera néanmoins personnalisée par introduction, pendant le transfert, de données introduites à partir, par exemple, du clavier illustré sur la figure 4. Cette introduction ne peut pas se faire, cependant, à volonté, mais uniquement dans les limites des possibilités ouvertes à l'utilisateur par la programmation de la carte ou des cartes maîtres introduites dans la zone d'introduction 42 dans l'exemple considéré.

Chaque zone 42, 43; 46, 49 d'introduction de cartes à microcircuit peut être dédiée ou peut être banalisée. De préférence, la zone d'introduction est divisée en sous-zones indiquées par des couleurs différentes de la face externe, avec certaines fentes à, par exemple, une ou plusieurs cartes maîtres, en d'autres zones dédiées à une ou plusieurs cartes utilisateur, en une ou plusieurs zones dédiées à des cartes de commande, en d'autres zones dédiées à des cartes de programme et d'autres zones dédiées à des cartes d'interface. Cette liste est loin d'être exhaustive et tous types de cartes, par exemple des cartes de guidage de l'utilisateur ou des cartes programmées à clef d'accès à des logiciels complexes, simplifiant l'utilisation de ces logiciels pour des utilisateurs novices, des cartes comportant des programmes de formation et, en général tout type d'information capable d'être exploité peuvent être employés au cours des transactions effectuées par le dispositif.

Les dispositifs représentés sur les figures 4 et 5 constituent un appareil à transactions multiples entre des cartes à microcircuit, et constituent donc la base d'un système à utilisation multiple. Comme l'appareil illustré sur la figure 1, les dispositifs selon les figures 4 et 5 reçoivent leurs possibilités de fonctionnement des cartes à microcircuit qui sont introduites dans les zones d'introduction de cartes. Toute l'intelligence du dispositif est donc dérivée des possibilités qui lui sont offertes par les données stockées dans les microcircuits des cartes en cours d'utilisation. Ce dispositif possède néanmoins une structure matérielle, avec son logiciel câblé associé.

La zone d'introduction des cartes à microcircuit, illustrée sur la figure 5, constitue un appareil en soi. Cet appareil peut être incorporé dans la console à clavier illustrée sur la figure 4 ou bien peut constituer un dispositif indépendant capable d'être raccordé à un clavier classique au travers de son accès 47, au moyen d'un connecteur approprié. Le dispositif de la figure 5 comporte également une sortie 48 permettant sa connexion à toute autre unité ou système, éventuellement avec l'aide d'une ligne de télécommunications. Il peut donc être connecté, par exemple, entre le clavier et l'unité centrale d'un microordinateur. Le dispositif comporte également une fente à glissière 41 pour la lecture de cartes magnétiques standard réalisées selon la norme ISO.

La console à clavier de la figure 4 est constituée essentiellement de l'appareil selon la figure 5 avec l'adjonction d'un clavier 44 qui se présente sensiblement comme le clavier de commande alphanumérique utilisé en microinformatique ou en général avec toute application informatique ou télématique. Le clavier 44 permet à l'utilisateur d'intervenir dans des transactions mais également d'effectuer toute opération de traitement de données, évidemment toujours en combinaison avec une ou plusieurs cartes à microcircuit. Il permet d'utiliser éventuellement les possiblités fournies par une connexion à un dispositif externe à la console à clavier, ce dispositif fournissant à la console à clavier sa propre intelligence. Les dispositifs selon la figure 4 ou 5 peuvent être soit raccordés sur le secteur soit recevoir leur alimentation d'une source interne, par exemple de piles au lithium. L'appareil selon la figure 4 est conçu pour recevoir un mini écran de contrôle 45 qui, dans le mode de réalisation représenté ici est placé sur le coté du montant latéral du clavier. Cet écran est tout à fait facultatif et ne serait pas normalement utilisé dans le cas où un autre élément du système comporte déjà un moyen de visualisation.

Les appareils de la figure 4 et la figure 5 peuvent être affectés entièrement à une application spécifique. Ils reçoivent leurs spécialisations à partir de cartes programmées, devenant ainsi des consoles de commande intelligentes capables de s'adapter à toute évolution des fonctionnalités de l'application auxquelles elles sont dédiées par un simple chargement ou remplacement des cartes ou par l'enfichage de cartes supplémentaires comportant des éléments nouveaux spécifiques à l'évolution d'une application. Ce clavier, ainsi rendu intelligent et ceci presque sans limitation, est également capable de remplacer tout clavier informatique au moyen d'un interfaçage approprié.

Finalement, les dispositifs de la figure 4 et la figure 5 peuvent recevoir tous les accessoires et périphériques, notamment des connecteurs intelligents, qui seront décrits par la suite.

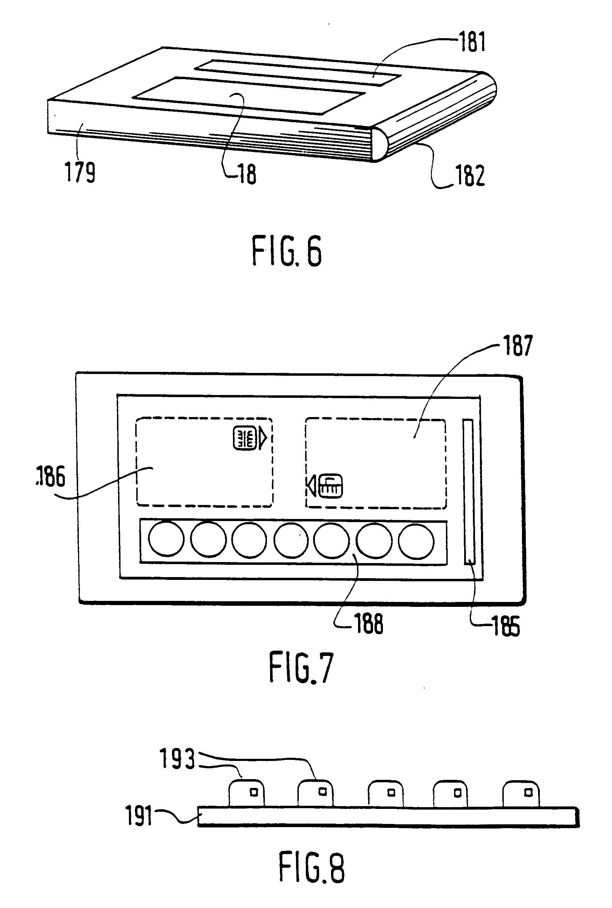

La figure 6 illustre une version compacte, ou de poche, d'un dispositif selon l'invention. Dans cette version, les cartes à microcircuit sont incorporées entièrement dans l'appareil et sont accessibles par enlèvement d'un couvercle (voir figure 7). Elles sont interchangeables mais ne sont pas apparentes de l'extérieur de l'appareil. Cet appareil possède les mêmes éléments que le dispositif selon la figure 1, notamment un écran tactile 180 et un affichage 181. Cet appareil est également conçu pour contenir un périphérique telle qu'une télécommande qui se trouve derrière le couvercle 182 ou un MODEM par exemple et qui, dans tous les cas est inclu à l'intérieur du boîtier 179 de l'appareil.

La figure 7 illustre l'appareil de la figure 6 avec le couvercle de fond enlevé. On y voit les deux cartes à microcircuit 186 et 187 retenues par exemple par clipsage, et les piles 188, par exemple des piles à lithium. La figure 7 illustre également une fente 185 permettant l'introduction d'une carte à microcircuit supplémentaire ou de n'importe lequel des périphériques, notamment des connecteurs intelligents, qui seront décrits plus loin.

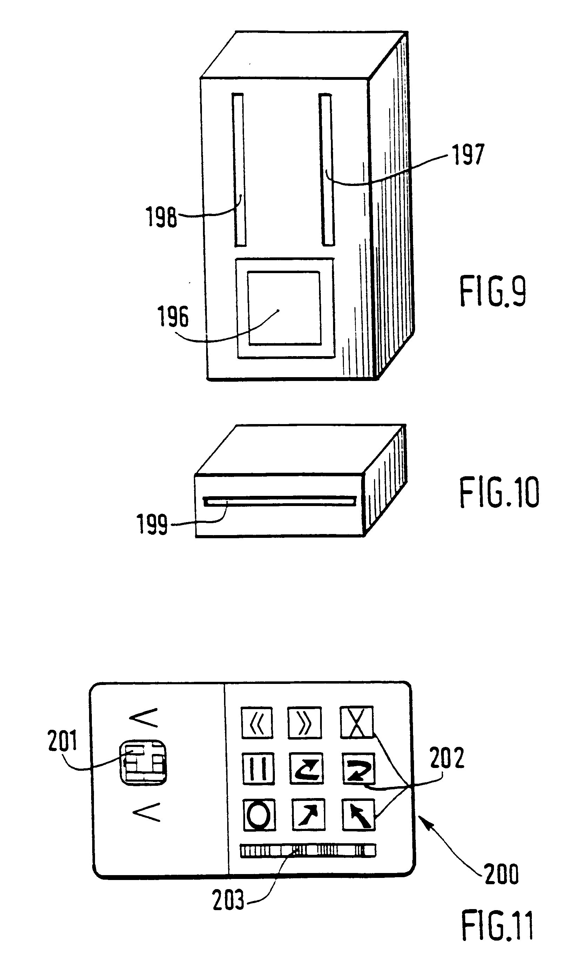

La figure 8 illustre, de façon très schématisée, un système d'interconnexion de plusieurs dispositifs, notamment ceux illustrés sur la figure 9, pouvant entrer dans la composition d'un système complet modulaire chaque appareil, par exemple 193, étant capable d'être enfiché dans une barre 191, notamment à bus d'interconnexion, qui peut constituer l'un des éléments d'un rack, pour des applications dans les domaines domotiques, de l'immobilier, des espaces contrôlés, etc.

La figure 9 illustre un dispositif similaire à ceux décrits précédemment mais conçu pour être installé dans une armoire fixe pour des applications telles que la domotique, la gestion d'automatisme, des systèmes de décodage, des blocs de péage, etc. La figure 9 illustre une vue frontale de l'appareil, et la figure 10 illustre une vue en plan de ce même appareil illustrant la fente 199 prévue pour l'un des connecteurs intelligents qui seront décrits par la suite, et notamment conçues pour permettre son raccordement à d'autres unités du même type montée, par exemple, dans un système installé en rack. L'appareil comporte notamment des fentes 198, 197 pour l'introduction de deux cartes à microcircuit conférant tout l'intelligence au système ou permettant des transactions, l'établissement de comptes rendus, etc., ainsi qu'un affichage 196 fournissant des indications à l'utilisateur.

Un certain nombre de périphériques, utilisables avec n'importe lequel des dispositifs décrits précédemment, de façon modulaire et entièrement compatible avec toute la gamme des dispositifs selon l'invention entrant dans la composition d'un système seront maintenant décrits. Afin de s'assurer d'une bonne gestion d'un système modulaire réalisé par les moyens de l'invention et l'absence de conflits, chaque élément, notamment ceux à microcircuit, possède une position bien définie dans une hiérarchie dont une carte maître est normalement la tête.

La figure 11 illustre un clavier 200, sensiblement du format carte de crédit ISO incorporant un microcircuit 201 permettant entre autres, une connexion électrique entre le clavier et le dispositif dans lequel il est enfiché, le dispositif fournissant notamment l'alimentation électrique du microcircuit du clavier. Ce clavier permet une gestion du système, soit ponctuellement pour des interventions spécifiques, soit de manière semi-permanent quand les interventions de l'opérateur sont nécessaires toute au cours d'une transaction. Le clavier comporte un certain nombre de touches sensibles, de préférence non-mécaniques et nécessitant une très légère pression pour leur activation. Ces touches 202 comportent des pictogrammes illustrant leur fonction et, éventuellement, un graduateur 203 capable de réaliser de fins réglages d'un système auquel le clavier est relié.

La clavier illustré sur la figure 11 permet la réalisation d'un certain nombre d'opérations fondamentales lors d'une transaction. Dans le cas de beaucoup des applications mises en oeuvre par les moyens de la présente invention, un clavier spécifique à chaque application, et personnalisable comme tous les autres éléments à microcircuit du système, sont proposés. Dans une application domotique par exemple, un clavier comportant les pictogrammes représentant les fonctions réalisables par chaque touche serait employé, le microcircuit comportant, évidemment, les algorithmes correspondants aux fonctions affectées à chaque touche.

Plus généralement, le clavier permet un adressage spécifique d'un élément du système afin de réaliser des mises à jour, le lancement de commande complémentaire lors du déroulement d'une transaction sous la commande d'un autre moyen de commande, des opérations ponctuelles rendues nécessaires dans le cadre d'une modification au système, ou des fonctions plus permanentes telle que la commande de jeux pour ordinateurs et, comme mentionné ci-dessus, des applications dans le domaine de la domotique. Beaucoup de ces applications du clavier nécessitent l'utilisation de l'un des connecteurs, également enfichable dans n'importe lequel des dispositifs selon l'invention, qui seront présentés plus loin.

Plus en particulier, le clavier 200 constitue l'un des moyens d'attribution, de modification, et de suppression des délégations attribuées à des cartes servantes ou dans n'importe lequel des dispositifs à microcircuit du système, y inclus les connecteurs et les claviers eux-mêmes. Ceci permet également la création de nouvelles fonctions, par exemple dans les domaines de la domotique ou des jeux pour ordinateurs, l'extension des systèmes par la mise en oeuvre de nouvelles fonctionnalité, et notamment l'affectation, modification, ou suppression de droits dans des applications commerciales ou bancaires.

Le clavier enfichable constitue l'un des éléments "actifs" d'un système selon l'invention, puisque il comporte son propre microcircuit ayant des possibilités de stockage, de traitement, et de modifications, éventuellement, du contenu de ses propres mémoires. Néanmoins, dans un bon nombre d'applications le clavier reste un élément de commande, voulant dire qu'il réalise les fonctions classiques d'un clavier tel que l'introduction de données, la création d'interruptions, l'émission de signaux de validation, etc. Dans une application mettant en oeuvre une carte maître tel que définie ci-dessus, le fonctionnement du clavier sera asservi à la programmation de cette carte maître. De la même manière, le système mettant en oeuvre un nombre relativement important de claviers en forme de carte personnalisée, toute absence de compatibilité avec des autres moyens mis en oeuvre dans un système empêchera le fonctionnement du clavier. Le clavier enfichable peut être également inhibé au moyen de commandes lancées à part d'un support ou d'une périphérique de niveau hiérarchique supérieur et notamment à partir d'autres cartes à microcircuit comportant une fonction de sécurité. Comme tout clavier pouvant équiper le système, son utilisation peut être subordonnée à l'introduction d'un code de sécurité par l'utilisateur, l'introduction d'un code erroné ou toute action reconnue comme abusive pouvant soit mener à une inhibition du clavier soit uniquement pour le cas de l'application considérée, soit en permanence, en d'autres termes pour toute application, sa mise de nouveau à disposition nécessitant l'intervention, typiquement, du fournisseur du service ayant rendu le clavier indisponible.

A des fins de sécurité, le clavier enfichable peut également être inhibé par l'utilisateur soucieux de protéger une ou plusieurs applications spécifiques. Dans ce cas, généralement, l'utilisateur introduit un code ou toute autre indication permettant de le reconnaître, les données ainsi introduits étant normalement stockées dans le microcircuit du clavier lui-même, mais pouvant également impliquer les microcircuits d'un autre composant du système. Comme il a été dit, ce clavier peut posséder un haut niveau de personnalisation, lui permettant de fonctionner uniquement dans un contexte spécifique et pour des fins relativement bien définis.

Le clavier enfichable à microcircuit est généralement mise en oeuvre par enfichage dans l'un des connecteurs universel illustrés sur les figures 13, 14, 15 et 23 une de ses fonctions dans ce cas est d'agir comme "clé" permettant la réalisation de transactions entre un dispositif 1 et une application extérieure.

Plus précisément et en référence à la figure 12, l'enfichage du clavier 200 dans la fente ou lumière 205 permet son intervention dans les relations entre une carte à microcircuit enfiché dans le dispositif 1 au coté opposé à la fente ou lumière occupée par le graduateur 203. Une telle intervention du clavier 200 est typiquement représentée par l'introduction d'un code permettant l'établissement d'une liaison entre la carte enfichée dans la fente à l'autre bout de l'appareil et l'application externe, ainsi qu'une intervention active dans le déroulement de cette transaction. Dans ce cas également, une utilisation non-autorisée ou abusive peut générer l'inhibition temporaire ou permanente du clavier enfichable ainsi que, éventuellement, l'établissement d'un compte rendu non seulement dans un autre élément du système mais également dans ladite application externe. Le connecteur 204 illustré sur la figure 12 constitue l'un des éléments clé d'un système modulaire réalisable selon la présent invention.

Le connecteur de base illustré sur la figure 12 est composé d'un boîtier 205 de petite taille comportant un système de connexion, par exemple à la base d'une prise DIN 209 apte a être raccordée à une fiche compatible 210 raccordée directement ou indirectement à une application externe. Le boîtier 205 comporte une fente 208 pour l'introduction d'une carte à microcircuit choisi des diverses possibilités offertes par le système, le boîtier 205 comportant à cet effet un connecteur apte à réaliser les connections nécessaires avec les pattes du microcircuit incorporé dans la carte à microcircuit et d'assurer, entre autres, l'alimentation électrique de cette carte à microcircuit moyennant l'enfichage du connecteur 204 dans l'une des fentes, par exemple 4 sur la figure 12, du dispositif 2 selon l'invention. A cet effet, le connecteur 204 comporte une partie saillante en forme de carte à microcircuit 206, la référence 207 indiquant ce microcircuit ou "puce". Moyennant sa partie 206 en forme de carte à microcircuit, le connecteur 204 peut être enfichée dans n'importe laquelle des fentes, 4 ou 6 sur la figure 1 du dispositif 1 selon l'invention, ou même, dans le cas ou deux connecteurs constituent un relais entre plusieurs supports à microcircuit ou module selon l'invention, dans les deux fentes, par exemple 4 et 6 de la figure 1: voir également la figure 23 illustrant une variante du même dispositif 1. Le connecteur lui-même est tout à fait modulaire et pourrait, par exemple, accepter l'introduction d'un autre connecteur 205 dans la fente 208.

A part d'un autre connecteur et un clavier enfichable 200 tel que expliqué ci-dessus, la fente 208 est également apte à recevoir n'importe laquelle des cartes à microcircuit présentées plus haut, par exemple une carte de commande représentée par un clavier enfichable 200 selon la figure 11 fortement personnalisé conçu pour réaliser des réglages fins ou des réglages d'adaptation, par exemple des réglages fins de fréquence ou d'indépendance dans une application connectée directement ou indirectement au connecteur 204 par la fiche 210, par exemple au moyen du graduateur 203 de la figure 11.

Le connecteur universel tel qu'illustré sur la figure 12 constitue le modèle de base de toute une gamme de connecteurs capables d'intervenir dans un système modulable selon l'invention. En plus de quelques applications spécifiques mentionnées plus haut, sa fonction de base est de réaliser une relation entre au moins une carte à microcircuit enfichée dans au moins l'une des fentes du dispositif selon l'invention, par exemple fente 6 sur la figure 1, et/ou la fente 208 sur la figure 12, avec une application ou un système externe connecté ou non sur un réseau, au moyen de sa prise 209. Evidemment le connecteur 204 peut comporter des prises males ou femelles de divers formats, tous adaptées à réaliser une relation avec le monde extérieur au dispositif. Le connecteur constitue donc la base de toute une gamme d'un nouveau type de connecteurs intelligents capables de reconnaître les autres modules à microcircuit connectés sur le même système, et de se faire reconnaître par ces autres modules. Le connecteur est également soumis à des règles hiérarchiques, comme tous les autres éléments à microcircuit d'un système réalisé selon l'invention. Des droits de différents niveaux peuvent notamment lui être affectés, modifiés, et supprimés à partir d'éléments de niveau hiérarchiques supérieurs dans le système et, notamment, par l'application extérieure reliée au connecteur par la prise 209 et la broche 210 sur la figure 12.

Par exemple, le connecteur universel représenté sur la figure 12 permet de relier une carte à microcircuit disposée dans la fente 208 à un terminal télématique, lui-même mis en relation avec un système centralisé auprès duquel il peut s'approvisionner en données, par exemple permettre à son possesseur à approvisionner la mémoire de données de la carte 5, en jetons tels une certaine somme d'argent provenant de son compte personnel, qui se trouve débité de ladite somme. L'opération inverse, soit créditer un compte en débitant la mémoire de données de la carte est tout aussi réalisable.

Il serait également possible de transmettre par le terminal télématique des données de la carte 5 à une carte 2 se trouvant en relation avec le terminal télématique, par exemple par l'intermédiaire d'un réseau de télétransmission.

En plus de ces fonctions de connexion pure, le connecteur universel 204 peut également réaliser des fonctions mettant en oeuvre des moyens plus importants; ce sont, par exemple, l'interfaçage avec d'autres systèmes, des conversions de données, et des fonctions similaires. Finalement, ce connecteur peut également permettre une conversation avec une carte réalisée selon un standard différent de celui capable d'êtres exploité par les lecteurs incorporés dans un dispositif tel que le dispositif 1 de la figure 1. Notamment, le connecteur universel peut être équipé de rainures de glissement pour la lecture de cartes comportant des pistes magnétique, comme illustré sur la figure 23.

La figure 13 illustre un connecteur similaire à celui de la figure 12 mais adapté à recevoir, dans la fente 213, une carte male et dans sa prise, non visible sur la figure, une fiche male 211. Un connecteur peut évidemment comporter toutes combinaisons de fiches ou de prises, la figure 13 d'un boîtier 212 étant fournie à titre d'illustration. Ce connecteur ne possède pas, dans sa version de base, de microcircuit, il emprunte ses fonctionnalités à celles de la carte à microcircuit, ou à la partie de carte telle qu'illustrée en 206 sur la figure 12, sa fonction étant plutôt l'établissement de connexions, son niveau d'intelligence étant fixé par l'élément enfiché dans la fente 213. L'élément enfiché dans la fente 213 reçoit, normalement, mais pas obligatoirement, son alimentation du connecteur lui-même ou d'une source externe au connecteur introduit soit au moyen du connecteur 211 par exemple ou au moyen d'une autre source externe. Ceci est notamment le cas pour une variante d'un connecteur dans laquelle le connecteur est susceptible d'être fixé à un mur ou encastré ou monté sur un autre support, tel qu'un châssis et aussi susceptible d'être câblé afin d'assurer l'alimentation de l'élément enfiché dans la fente de ce connecteur. Tout comme le connecteur illustré sur la figure 12, le connecteur de la figure 13 peut également incorporer ses propre moyens d'intelligence réalisés au moyen d'un élément intérieur au boîtier 212 introduit par enfichage, brochage, ou tout autre moyen. Finalement, tous les connecteurs présentés en relation avec les figure 12, 13 et 23 peuvent être équipés de moyens de lecture permettant la lecture de cartes ayant des différentes dispositions possibles du microcircuit, selon les normes AFNOR ou ISO présentées plus haut moyennant un équipement avec des zones multiples de lecture.

Bien entendu, le petit appareil représenté sur la figure 1 peut, outre les fentes ou lumière d'introduction 4 et 6, comporter un connecteur (ce qui n'est pas représenté) du type de celui représenté sur la figure 12 ou 13. Dans un tel cas, il est possible à son utilisateur tant de réaliser des transactions entre des cartes enfichables 5 et 2 qu'entre l'une ou l'autre de ces cartes 5 ou 2 avec des moyens extérieurs avec lesquels elles sont mises en relation par ledit connecteur. Ceci permet, par exemple, à un commerçant disposant d'un support ou carte 5 qu'il a introduit dans la fente 6, par exemple, de se faire créditer du montant d'un achat effectué par un tiers dont une carte du type 2 ou 5 a été introduite dans la fente 4 opposée, après avoir reconnu la compatibilité des deux cartes entre elles. Bien entendu, la carte du tiers se voit débitée du montant correspondant. Si la mémoire de données de la carte du tiers n'est pas suffisante, celui-ci peut, le cas échéant, se mettre en rapport via la connexion et l'interface dédié que comporte le boîtier 1 par l'intermédiaire du terminal télématique ou de tout autre moyen avec une source auprès de laquelle il peut s'approvisionner en fonds de son compte dont il est débité de ces fonds.

De même, le commerçant peut grâce à ce même appareil, créditer son propre compte des fonds dont la mémoire de données de sa carte est créditée, ces fonds étant débités de la mémoire de données de sa propre carte.

Il est ainsi possible avec un seul appareil de faire toutes les transactions qu'un commerçant requiert et ce avec la plus grande fiabilité et la plus grande sécurité.

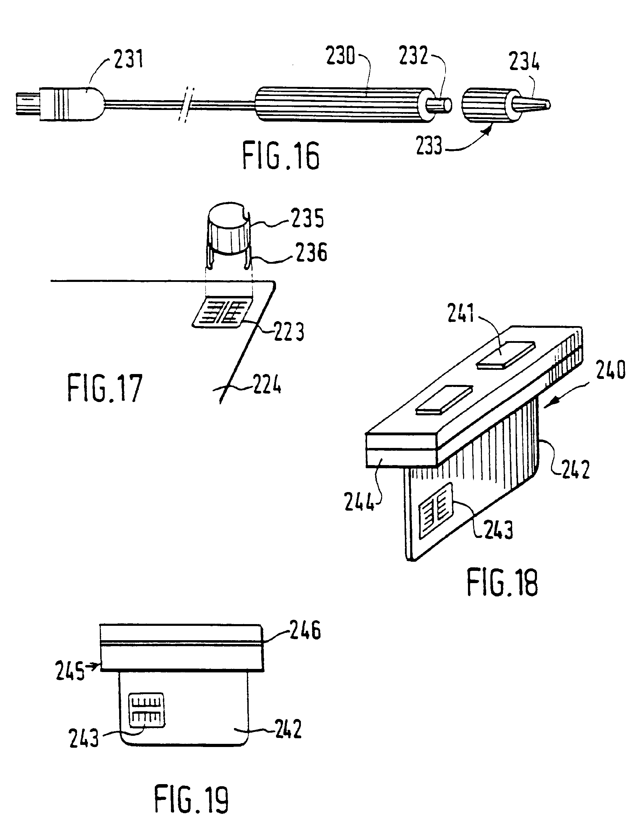

Les figures 14 et 15 représentent deux réalisations possible d'un troisième type de périphérique capable d'être connecté, par enfichage, à n'importe quel autre module d'un système, notamment le dispositif selon la figure 1 et les connecteurs tels que ceux illustrés sur les figures 12 et 13. Les deux dispositifs illustrés sur les figures 14 et 15 sont essentiellement destinés à la télécommande de divers dispositifs à partir d'un module de petite taille, de poids très réduit et s'adaptant parfaitement à la manipulation. Typiquement, les périphériques selon les figures 14 et 15 sont enfichées dans l'un des fentes, par exemple 4, d'un dispositif tel que celui représenté sur la figure 1, une autre carte, par exemple la carte 5 de la figure 1, enfichée dans l'autre fente 6, déterminant les opérations à effectuer, autorisant la mise en oeuvre de certaines opérations lancées à partir du clavier, par exemple le clavier indiqué par la référence 300 sur figure 22, et pouvant établir un compte-rendu des opérations effectuées par l'utilisateur, et les réponses reçues, etc.

Le dispositif 220 selon la figure 14 est composé d'une partie sensiblement en forme d'une partie d'une carte de crédit 224 incorporant un microcircuit 223 surmonté d'un émetteur/récepteur infrarouge composé d'un module électronique incorporé dans un logement 221 lui-même surmonté d'une dôme 222 incorporant les moyens d'émission et de réception, ou au moins des moyens d'émission, des signaux codés dans la bande des fréquences infrarouges.

Le dispositif 225 illustré sur la figure 15 possède également une partie 224 en forme générale d'une partie de carte de crédit incorporant un microcircuit 223 et un logement 226 pour un circuit électronique adapté à émettre et/ou recevoir des signaux codés dans la bande des fréquences hertziennes, de préférence dans la bande des fréquences ultra-courtes, au moyen de l'antenne 227. Les circuits électroniques d'émission et/ou de réception utilisés dans ces deux modes de réalisation sont d'une puissance relativement faible, adaptée à la zone de couverture requise de l'appareil. Les deux périphériques selon les figures 14 et 15 comportent normalement leur propre source d'alimentation en vue des demandes en énergie relativement élevées, notamment pendant la phase d'émission. Ils peuvent néanmoins être alimentés à partir de l'alimentation de l'unité de base tel que celui illustré sur la figure 1, ou à partir d'une alimentation externe. Dans ce cas, les circuits électroniques d'émission et/ou de réception reçoivent leur énergie à travers des pastilles d'alimentation du microcircuit 223, au même titre que le microcircuit lui-même. En général, afin d'augmenter l'autonomie des piles dans le cas d'une auto-alimentation, l'alimentation de ces circuits est inhibée pendant les périodes de non-utilisation des périphériques et, avantageusement, pendant les périodes d'absence d'émission et de réception pendant l'utilisation.

Comme tous les éléments du système, les périphériques d'émission et/ou de réception illustrés sur les figures 14 et 15 sont fournis à l'état personnalisé, ou sont capable d'être personnalisés. Le microcircuit lui-même comporte évidemment des données relatives au rôle spécifique du périphérique, par exemple sa fonction d'émission pure ou d'émission/réception, la fréquence et le type de modulation auxquels il est adapté, des éléments de protocole, etc. Le microcircuit peut également comporter des éléments de sécurité tels qu'une loi de codage spécifique, un mode de brouillage, des algorithmes de décodage, des séquences de détection d'erreur, etc. Evidemment, le microcircuit peut également comporter des moyens pour vérifier l'identité de l'utilisateur et empêcher toute utilisation frauduleuse ou abusive.

Finalement, le microcircuit 223 comporte en général des données spécifiques à l'utilisation, son rôle en tant que télécommande, de commande pour les application domotiques, de moyens de "pointage" dans le cas d'utilisation comme système de surveillance de lieux, ou simplement comme émetteur/récepteur de données.

Ce périphérique, comme tous les autres périphériques du système, comporte également dans son microcircuit 223 des données lui permettant de reconnaître les autres éléments présents dans un système, et de se faire reconnaître.

L'information contenue dans le microcircuit 223 de la périphérique selon les figures 14 et 15 spécifie, en général, son mode de fonctionnement, ses possibilités et ses limitations et ses utilisations. Pour prendre une analogie avec le modèle "Open Systems Interconnect" (OSI) de l'ISO, les fonctions incorporées dans ce microcircuit représentent la ou les couches inférieures du modèle OSI. Les éléments moins "physiques" du périphérique sont définis en général dans une autre carte, par exemple la carte 5 enfichée dans l'autre fente 6 du dispositif 1 selon la figure 1. Cette carte, également fortement personnalisée et capable de personnalisation, peut comporter une série d'ordres à effectuer par un dispositif télécommandé par le dispositif selon la figure 14 ou 15, où sa présence dans le dispositif selon la figure 1 peut être nécessaire afin d'autoriser l'utilisateur à lancer des opérations, par exemple à partir du clavier 300 dans le dispositif illustré sur la figure 22.

Le périphérique d'émission et/ou de réception peut également être utilisé avec les connecteurs selon, par exemple, les connecteurs illustrés sur les figures 12 et 13. Dans ce cas, les données à transmettre et/ou à recevoir peuvent être stockées dans le microcircuit de la carte 5 de l'installation 1 selon la figure 1, introduites à partir du clavier 300 dans le cas d'un dispositif selon la figure 22 ou reçues et/envoyées au moyen du connecteur, par exemple la prise 209 et la fiche 210 sur la figure 12. Dans ce dernier cas, c'est-à-dire dans le cas d'une utilisation en tant que télécommande par exemple asservie aux données venant de l'extérieur au moyen de la fiche 210, et avec le périphérique selon la figure 14 ou 15 introduit dans la fente 208 de la figure 12, la présence d'une deuxième carte, par exemple la carte 5 de la figure 1, est généralement nécessaire. Ceci se justifie non seulement pour des fins de sécurité, mais également, dans le même ordre d'idées, afin de rendre compte des opérations effectuées, et d'en garder une trace permanente ou semi-permanente.

La figure 16 illustre un autre périphérique utilisable avec le système, composé d'un analyseur 230 capable d'être connecté, au moyen du connecteur 231 à un connecteur universel tel que celui illustré sur la figure 12, et ceci au moyen de la prise 209. Cet analyseur est en général conçu pour l'établissement d'une liaison, soit par contact direct, soit par émission/réception, avec des microcircuits insérés dans les matériels. En général, l'analyseur, réservé à une utilisation par des professionnels, des développeurs, etc. et en général nécessitant la présence simultanée d'une carte d'autorisation d'accès dans le système, est conçu pour permettre un contact direct avec des microcircuits du type PROM, placés sur des matériels qui sont conçus pour être dépannés ou vérifiés rapidement par simple contact. Raccordé au dispositif selon la figure 1 au moyen d'un connecteur tel que celui illustré sur la figure 12, l'analyseur 230 permet le test des fonctions d'un microcircuit auquel il est appliqué. Ceci se réalise suivant une séquence de tests mémorisés, par exemple, dans la carte 5 enfichée dans l'appareil selon la figure 1. Le système étant modulaire, l'analyseur 230 peut être branché, au moyen d'un connecteur adapté, sur un système qui est également raccordé, au moyen par exemple de la fiche 210 de la figure 12, à une application télématique externe. Ces branchements rendent possible un télédépannage par le biais éventuel d'un système local ou éloigné.

L'analyseur illustré sur la figure 16 est essentiellement composé d'un corps 230 permettant sa manipulation par la main de l'utilisateur. Ce corps comporte une saillie 232 adaptée à recevoir une tête mobile et interchangeable 233. Une tête mobile spécifique est adaptable à chaque format de microcircuit PROM, et l'utilisation d'une tête spécifique permet également l'établissement d'une liaison avec un microcircuit d'un standard nouveau ou d'un format particulier.

L'analyseur décrit ci-dessus est normalement utilisé en combinaison avec le canon de centrage 235 illustré sur la figure 17. En général, le guide est posé à l'installation du microcircuit PROM au moyen de ces pattes 236 qui sont fixées sur le microcircuit 223 porté par le support flexible 224 mais il peut, évidemment, être ajouté à un circuit dépourvu de moyens de centrage. Sa fonction est d'assurer le centrage de la pointe de touche 234 de centrage de l'analyseur et le bon adressage des contacts du microcircuit concerné.

L'analyseur illustré sur la figure 16 est conçu pour être connecté à la prise 209 du connecteur universel de la figure 12 au moyen, par exemple, d'un connecteur DIN 231. Une séquence de tests ou de déverminage peut être stockée dans une carte telle que la carte 5 illustrée sur la figure 1, et un clavier tel que celui illustré sur la figure 11 peut être enfiché dans la fente 208 du connecteur universel 204 de la figure 12 peut être employé pour lancer une série ou une séquence de tests en combinaison avec l'affichage de messages correspondant à un dépannage guidé sur l'écran 300 du dispositif illustré sur la figure 22, avec également l'affichage de résultats sur ce même écran 300 et, l'enregistrement des résultats des tests dans une partie de la mémoire de la carte 5 sur la figure 1. Ceci est une illustration d'une utilisation typique de l'analyseur 230, mais le dépannage peut également être guidé ou piloté d'un système externe connecté également à une prise similaire à la prise 209 de la figure 12, également avec la possibilité de stockage des résultats dans une carte telle que la carte 5 sur la figure 1. Le système étant modulaire, diverses combinaisons de matériel sont possibles. Néanmoins, la structure hiérarchisée des éléments du système et le besoin de compatibilité stricte entre eux, et en général la nécessité de la présence d'une carte capable de "déverrouiller" les protections implicites d'une application rendent le système particulièrement fiable du point de vue de sa sécurité et l'absence de conflit: toute situation de conflit suppose l'absence d'un élément possédant sa propre identité dans le système, cette absence empêchant son fonctionnement sans ou avec l'affichage d'un élément indicateur de cette absence.

Tel qu'illustré sur la figure 16, l'analyseur 230 est raccordé directement au connecteur universel 204 de la figure 12 au moyen d'une prise DIN. L'utilisation de cet analyseur suppose évidemment la présence simultanée d'au moins une carte à microcircuit ou un module similaire, contenant le logiciel et les autorisation et les identités spécifiques à cet analyseur. L'analyseur 230 peut, évidemment, soit être raccordé au système au moyen d'un connecteur du type carte à microcircuit enfichable, soit incorporer une partie au moins de son logiciel dans son corps 230.

La figure 18 et la figure 19 illustrent encore deux périphériques qui sont capables d'être raccordés au système. La figure 18 représente une commande sensible par effleurement 240 munie d'une ou plusieurs touches 241 à effleurement montées sur un boîtier 244. Celui-ci peut avoir sa propre alimentation ou non. Il a aussi un circuit électronique, monté sur un support 242 en forme également d'une carte de crédit avec un microcircuit 243 incorporé dans le support. Le dispositif de commande 240 est essentiellement utilisé dans des applications telles que la domotique pour des fonctions telles que la commande de marche-arrêt de dispositif connecté directement ou indirectement au système, la commande progressive par gradations suite à des touchers successifs, etc. La commande 240 peut également jouer le rôle d'un dispositif de sécurité, le boîtier 244 contenant des circuits, fonctionnant en coopération avec le microcircuit 243 et, éventuellement, des autres circuits d'un système modulaire permettant la reconnaissance, au toucher, d'un utilisateur qui appuie sur l'une des touches 241. Dans ce cas, les algorithmes de reconnaissance seront normalement contenus dans le microcircuit 243, l'utilisateur lui-même, par exemple, ayant effectué les démarches nécessaires afin de réaliser l'écriture des données lui permettant d'être reconnu au toucher.

La figure 19 illustre également une commande de marche-arrêt 245 composée essentiellement d'un support 242 incorporant un microcircuit 243 surmonté d'un boîtier 246 contenant un circuit de détection de présence. Ce détecteur de présence 245 peut jouer le rôle d'une commande marche-arrêt d'un système modulaire dont il fait partie, ou, surtout dans les domaines de la sécurité et du domotique, ce détecteur de présence peut également jouer le rôle d'une protection, ou de détecteur de la présence de personnes non-autorisées, les circuits contenus dans le boîtier 246 pouvant être du type statique ou à balayage.

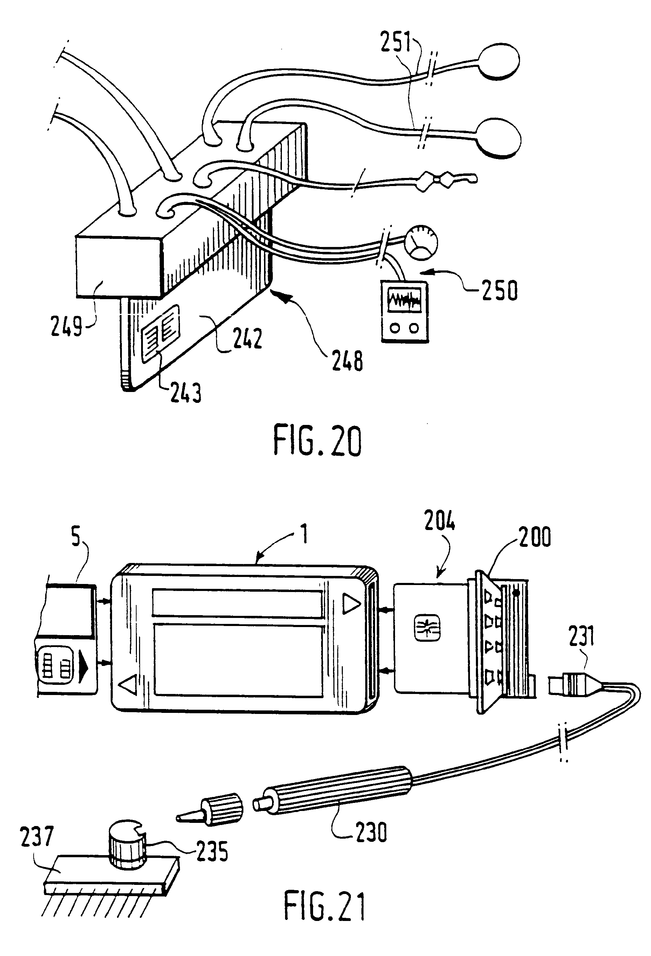

La figure 20 illustre un dernier exemple d'un périphérique capable d'être connecté à un système modulaire grâce à sa partie mâle 242 de connexion avec son microcircuit 243 incorporé. Le dispositif illustre sur la figure 20 est un connecteur 248 dédié à une tâche spécifique telle que la surveillance médicale, au moyen de ses capteurs 251 illustrés très schématiquement à titre d'exemple, ou dans les domaines de tests, de contrôle, et de surveillance dans les laboratoires, les ateliers de fabrication, etc. pour la connexion d'appareils de mesure tels que ceux illustrés très schématiquement par la référence 250.

Afin d'illustrer les possibilités de personnalisation et de constitution d'un système parfaitement modulaire rendu possible par l'invention, une application typique utilisant l'analyseur selon la figure 16 sera maintenant considérée. L'application, illustrée sur la figure 21, concerne le dépannage rapide ou la mise au point d'un appareil du type grand public, par exemple un poste de télévision de la nouvelle génération. A des fins de dépannage rapide et/ou de mise au point, le fabricant aura équipé le poste de télévision d'une puce 237 de dépannage rapide avec le canon 235 selon la figure 17 en place permettant un accès à ce microcircuit. Evidemment, le canon 235 est normalement protégé, par exemple au moyen d'un capuchon 236, dans sa situation normale de non-utilisation. Pour chaque modèle ainsi équipé, le fabricant prévoit également la fourniture d'une carte personnalisée, contenant des logiciels de test et des séquences de test et qui constitue la carte "maître". C'est par exemple la carte 5 qui est introduite dans la fente 6 de l'appareil 1 de la figure 1. L'autre fente 4 reçoit le connecteur selon la figure 13, ce connecteur, bien qu'étant intelligent, est un connecteur banalisé capable de reconnaître le type de carte enfichée dans l'autre fente 6 du dispositif 1 sans l'introduction de fonctionnalités supplémentaires. L'analyseur 230 de la figure 16 est branché au connecteur universel 204 au moyen de son connecteur 231. L'utilisateur choisit la tête interchangeable 233 qui correspond aux indications portées, par exemple, sur le canon 235 de la figure 17. La fente 208 du connecteur universel 204 peut recevoir une carte qui est complémentaire à la carte principale enfichée dans la fente 6 de la figure 1, par exemple la carte de garantie du poste de télévision, une carte de commande, la carte d'entretien ou toute carte supplémentaire complétant les fonctions de la carte principale dans le cas d'une nouvelle version du poste de télévision, ou d'un changement de fonctionnalité de celui-ci. De cette façon, en toute généralité, on peut traiter, en parfaite coopération avec la carte principale, un élément du dépannage qui n'est pas traité par la carte principale. Exactement comme les applications considérées précédemment, la carte principale 5 va générer une série de messages et d'options sur l'écran à cristaux liquides, le technicien d'entretien suivant les instructions et répondant aux options qui lui sont proposées.

Les figures 22 et 23 illustrent diverses variantes et possibilités d'intégration de l'unité de base 1 de la figure 1. La figure 22 illustre un gestionnaire multicarte 298 similaire à celui illustré sur la figure 1 équipé d'un écran tactile ou sensible au toucher 300 à cristaux liquides, l'affichage spécifique à l'application concernée étant généré par l'une des cartes enfichables 296 ou 297. Cette variante est également équipée d'une sonde 299 rabattable fonctionnant selon le même principe que la sonde de la figure 21 et permettant la lecture, l'écriture, ou d'autres transactions entre l'une des cartes 296 ou 297 enfichées dans le dispositif 298 et un microcircuit intégré dans un support réalisé selon une autre norme, ou intégré dans un appareil. Evidemment, la présence de l'une des cartes 296, 297 est obligatoire pour la réalisation de cette opération, afin de fournir "l'intelligence" nécessaire.

La figure 23, présentée brièvement plus haut, illustre un connecteur universel 301 de la figure 12 équipé d'une lecture à glissière pour une carte 302 à bandes magnétiques.

## Revendications

1. Procédé de transaction entre au moins un premier support (5; 186; 296) de données enfichable à microcircuit, ce support étant du type couramment appelé carte à mémoire ou à microprocesseur, et au moins un deuxième support de données, comportant au moins les étapes de mise en relation desdits supports, de lecture dudit premier support, d'identification de la compatibilité du premier support avec le deuxième support et de transfert de données de l'un des supports sur l'autre pendant une transaction entre lesdits premier et deuxième supports à travers un circuit d'interfaçage (11), caractérisé en ce que l'on utilise en tant que premier support de données un support à microcircuit (5; 186; 296) qui contient toutes les données d'identification, de commande et de gestion dudit-circuit d'interfaçage (11) et de ladite transaction.

2. Procédé de transaction entre au moins un premier support de données et au moins un deuxième support de données selon la revendication 1, caractérisé en ce que l'on utilise, comme deuxième support de données, un support (3; 185; 297) également en forme d'élément enfichable à microcircuit, ce support étant habilité à recevoir des données lors d'une transaction uniquement dans le cas où ledit premier support est habilité à lui envoyer des données, et les données transférées pouvant être limitées par une autorisation définie.

3. Procédé de transaction entre au moins un premier support de données et au moins un deuxième support de données selon la revendication 1, caractérisé en ce que l'on utilise, comme deuxième support de données, un support capable d'être mis en correspondance avec ledit circuit d'interfaçage (11) et qui fait partie d'un système indépendant dudit circuit d'interfaçage.

4. Procédé de transaction selon l'une quelconque des revendications 1 à 3, caractérisé en ce que l'on utilise, en tant que circuit d'interfaçage, un moyen de communication commandé par des moyens à logique câblée (11), et que l'on pilote lesdits moyens à logique câblée exclusivement par les informations du programme de base stockées dans ledit premier support (5; 186, 296) et qu'on limite les fonctions dudit circuit d'interfaçage à l'accès aux zones de données desdits microcircuits, ledit accès étant autorisé par les moyens d'identification de la compatibilité du premier support.

5. Procédé de transaction selon l'une quelconque des revendications 1 à 4, caractérisé en ce que l'on programme le premier support de façon à pouvoir transférer une partie au moins des données autorisées vers ledit deuxième support et que l'on conditionne ce transfert en fonction des choix imposés soit par un opérateur humain, soit par au moins un élément de validation (200) participant dans ladite transaction, ou une combinaison des deux, l'existence et l'étendue desdits choix étant déterminées par ledit premier support.

6. Procédé de transaction selon l'une quelconque des revendications précédentes, caractérisé en ce que l'on conditionne ladite transaction par des signaux externes auxdits premier et deuxième supports et ledit circuit d'interfaçage, la possibilité d'un tel conditionnement étant déterminée par les informations du programme de base stockées dans ledit premier support.

7. Procédé de transaction selon l'une quelconque des revendications précédentes, caractérisé en ce que ledit premier support établit un compte-rendu de chaque transaction à laquelle il intervient.

8. Procédé de transaction selon l'une quelconque des revendications précédentes, caractérisé en ce que l'on utilise, comme deuxième support, un support (3; 185; 297) enfichable à microcircuit habilité à recevoir des données à partir d'au moins un premier support, et apte à sécuriser les données qu'il a ainsi reçues et à pouvoir transférer ou déléguer, à son tour, une partie des données qu'il contient, cette délégation étant toujours sous l'autorisation des données transférées initialement dudit premier support et pouvant être éventuellement sous le contrôle d'un opérateur humain et/ou la présence ou l'absence de signaux de validation, les possibilités dudit contrôle étant également déterminées par les données transférées initialement.

9. Procédé selon l'une quelconque des revendications précédentes, caractérisé en ce qu'il comprend les étapes de:
- établir un contact électrique direct ou indirect avec les terminaux du microcircuit dudit premier support (5; 186; 296) enfichable à microcircuit,
- établir un contact électrique direct ou indirect avec les terminaux du microcircuit d'au moins un deuxième support (3; 185; 297) enfichable à microcircuit, afin d'établir une liaison, à travers ledit circuit d'interfaçage (11), entre lesdits premier et deuxième microcircuits,
- initier le déroulement d'un algorithme d'identification et d'accès dudit premier microcircuit,
- initier le déroulement d'un algorithme d'identification et d'accès dudit deuxième microcircuit,
- transférer des données résultant desdits déroulements vers ledit circuit d'interfaçage (11),
- comparer, dans ledit circuit d'interfaçage (11), les résultats desdits déroulements par une méthode déterminée par ledit premier support enfichable à microcircuit,
- établir si une transaction est possible à partir du résultat de ladite comparaison,
- dans le cas où la transaction est reconnue comme possible pour ces deux partenaires, d'envoyer d'éventuels signaux d'activation d'un moyen d'intervention humaine (7; 45; 181, 196; 300) dans ladite transaction à partir dudit premier support enfichable à microcircuit vers ledit circuit d'interfaçage (11) afin de piloter des moyens de communication avec un opérateur humain,
- effectuer un transfert de données toujours sur la commande dudit premier microcircuit entre les deux microcircuits des supports, ledit circuit d'interfaçage (11) n'intervenant dans la transaction qu'en tant qu'interface entre lesdits supports et en tant que moyens de communication bi-directionnelle avec un opérateur humain ou une autre source de signaux connectée audit circuit d'interfaçage.

10. Un support enfichable à microcircuit comportant une pluralité de zones mémoires dédiées comprenant au moins une zone à accès interdit, une zone à données accessibles, une zone d'identification et une zone de transaction, caractérisé en ce que ledit support comprend une zone de commande et de pilotage d'un circuit d'interfaçage copiable à partir dudit support sur un autre support avec lequel il est compatible et une zone de données d'information susceptibles d'être copiées par ouverture de la carte par délégation.

11. Un support selon la revendication 10, caractérisé en ce qu'il comporte une zone confidentielle à accès par paliers codifiés.

12. Un support selon la revendication 10 ou 11, caractérisé en ce qu'il comporte une zone de données d'information susceptibles d'être transférées ou acquises.

13. Un support selon une quelconque des revendications 10 à 12, caractérisé en ce qu'il comporte une zone de données de programme copiables dudit support vers un autre support avec lequel il est compatible.

14. Un support selon une quelconque des revendications 10 à 13, caractérisé en ce qu'il comprend une zone de données de programme transférables dudit support vers un autre support avec lequel il est compatible.

15. Dispositif permettant la réalisation d'une transaction entre au moins un premier support de données enfichable à microcircuit et un deuxième support selon une quelconque des revendications 1 à 9, caractérisé en qu'il comporte des moyens (15a, 15a′) d'établissement d'un contact électrique direct ou indirect avec un premier support (5; 186; 296) enfichable à microcircuit et au moins un deuxième support (3; 185; 297), un circuit (11) d'interfaçage dudit premier support et dudit deuxième support, des moyens (14a; 14a′) d'identification du deuxième support avec le premier support, et des moyens (11) permettant d'effectuer, entièrement sous la commande globale dudit premier support, un transfert de données de l'un desdits supports vers l'autre support.

16. Dispositif selon la revendication 15, caractérisé en ce qu'il comporte un moyen de visualisation (7; 45; 181; 196; 300) pour l'affichage d'éléments d'information relatifs à ladite transaction et/ou un moyen permettant à un opérateur humain d'intervenir dans ladite transaction.

17. Dispositif selon la revendication 15, caractérisé en ce que les éléments composants ledit affichage sont générés par l'un des supports (5, 2) à microcircuit enfichés dans le dispositif.

18. Dispositif selon l'une quelconque des revendications 15 à 17, caractérisé en ce qu'il comporte un écran à cristaux liquides susceptible d'être activé et alimenté en informations par l'un des supports (5, 2) à microcircuit.

19. Dispositif selon l'une des revendications 15, 16 ou 17, caractérisé en ce qu'il comporte un clavier consistant en un écran tactile ou sensible au toucher, ledit affichage (8, 300) étant généré par le support à microcircuit (5).

20. Dispositif selon l'une quelconque des revendications 15 à 19, caractérisé en ce que ledit clavier est un clavier externe capable d'être raccordé audit dispositif (42) au moyen d'un connecteur (47).

21. Dispositif selon l'une quelconque des revendications 15 à 20, caractérisé en ce qu'il comporte un moyen de lecture de carte magnétique (41).

22. Dispositif selon la revendication 15, caractérisé en ce que ledit support (5, 2) enfichable à microcircuit est constitué par un clavier (200) de format sensiblement conforme à une carte de crédit normalisée, recevant son alimentation dudit dispositif et capable de contrôler partiellement ou entièrement sous la commande d'un opérateur, d'autres éléments d'un système auquel il est associé.

23. Dispositif selon la revendication 22, caractérisé en ce que ledit clavier enfichable (200) comporte au moins une touche portant un pictogramme illustrant sa fonction, ledit microcircuit incluant des moyens de mémorisation permettant une personnalisation pour une application spécifique dudit clavier.

24. Dispositif permettant la réalisation d'une transaction entre au moins un premier support enfichable à microcircuit et un deuxième support selon l'une quelconque des revendications 15 à 23, caractérisé en ce qu'il est associé à un connecteur (204, 212, 215) muni ou non de son propre niveau d'intelligence, ledit connecteur (204, 212, 215) comportant au moins une fente permettant l'introduction d'un support à microcircuit, permettant de réaliser une communication entre l'un au moins desdits supports et un périphérique ou un système externe.

25. Dispositif selon la revendication 24, caractérisé en ce que ledit connecteur est muni d'un support (206) à microcircuit (207) susceptible d'être enfiché dans un dispositif selon l'une quelconque des revendications 15 à 23.

26. Dispositif selon la revendication 24, caractérisé en ce que ladite intelligence est réalisée au moyen du microcircuit porté dans ladite partie (206) en forme de carte de crédit.

27. Dispositif selon la revendication 24, caractérisé en ce que ladite intelligence est obtenue au moyen du microcircuit d'un élément male en forme générale de carte de crédit enfichée dans au moins une fente (213; 216) du connecteur.

28. Dispositif selon l'une quelconque des revendications 24 à 27, caractérisé en ce qu'il comporte, de manière fixe ou mobile, un support d'intelligence complémentaire complétant ou remplaçant lesdits moyens d'intelligence.

29. Dispositif selon la revendication 15, caractérisé en ce que ledit support enfichable à microcircuit (220, 225) comporte des moyens susceptibles d'émettre et/ou recevoir des données vers ou à partir d'un système externe sans l'intermédiaire d'une liaison matérielle.

30. Dispositif selon la revendication 29, caractérisé en ce que le support enfichable comporte des moyens (221, 222) lui permettant d'émettre et/ou de recevoir dans la gamme des fréquences infrarouges.

31. Dispositif selon la revendication 29, caractérisé en ce que le support enfichable comporte des moyens (226, 227) apte à recevoir et/ou émettre dans la gamme de fréquences radio-électriques de fréquence élevée.

32. Dispositif selon la revendication 24, caractérisé en ce que ledit périphérique externe est un analyseur (230) généralement en forme de pointe de touche capable d'établir un contact direct ou indirect avec les contacts d'un microcircuit (223 figure 17; 237 figure 21).

33. Dispositif selon la revendication 32, caractérisé en ce que ledit analyseur est utilisé avec un canon de centrage (235) permettant le bon adressage des contacts du microcircuit (223; 237) et susceptible d'être fixé sur ledit microcircuit (223 figure 17).

34. Dispositif selon la revendication 15, caractérisé en ce que ledit support enfichable à microcircuit présente la forme générale d'une carte de crédit (242) incorporant un microcircuit (243) surmonté d'un boîtier (244) comportant un dispositif de commande manuelle (242) d'un système auquel il est raccordé.

35. Dispositif selon la revendication 34, caractérisé en ce que le dispositif de commande manuelle (242) comporte des moyens (241; 243) permettant la reconnaissance d'un utilisateur autorisé.

36. Dispositif selon la revendication 15, caractérisé en ce que ledit support enfichable à microcircuit est constitué par un connecteur (245) présentant la forme générale d'une carte de crédit (242) incorporant un microcircuit (243) surmonté d'un boîtier (246) comportant des circuits de détection de présence.

37. Dispositif selon la revendication 15, caractérisé en ce que ledit support enfichable à microcircuit est constitué d'un connecteur (248) présentant la forme générale d'une carte de crédit (242) incorporant un microcircuit (243) surmonté d'un boîtier (249) et permettant le raccordement audit système de dispositifs de détection, de mesure et de captation (250; 251) de phénomènes physiques.

## Claims

1. A method for effecting a transaction between at least one first plug-in data carrier (5; 186; 296) incorporating a microcircuit, said carrier being of the type commonly referred to as an IC memory card or a microprocessor card, and at least one second data carrier, comprising at least the steps of setting up a relation between said carriers, reading said first carrier, identifying the compatibility of said first carrier with the second carrier and transferring data from one of said carriers to the other during a transaction between said first and second carriers via an interfacing circuit (11), characterized in that it comprises the use for said first data carrier of a microcircuit carrier (5; 186; 296) which contains all necessary data for carrying out identification and for controlling and managing said interfacing circuit (11) and said transaction.

2. A method for effecting a transaction between at least one first data carrier and at least one second data carrier according to claim 1, characterized in that said second data carrier comprises a data carrier (3; 185; 297) which is also in the form of a plug-in microcircuit element, said second data carrier being able to receive data during a transaction only in the case where said first data carrier is authorized to send data thereto, the data actually transferred being able to be limited by defined degree of authorization.

3. A method for effecting a transaction between at least one first data carrier and at least one second data carrier according claim 1, characterized in that said second data carrier comprises a data carrier able to be adapted to correspond with said interfacing circuit (11) and which constitutes part of a system that is independent of said interfacing circuit.

4. A method for effecting a transaction according to any one of claims 1 to 3, characterized in that it comprises the use for said interfacing circuit of communications means controlled by hardwired logic means (11), and that said hardwired logic means are exclusively controlled by data in the operating software stored in said first data carrier (5; 186; 296) and that the functions of said interfacing circuit are limited to providing access to the data regions of said microcircuits, said access being authorized by said means for carrying out identification included in said first data carrier.

5. A method for effecting a transaction according to any one of claims 1 to 4, characterized in that said first data carrier is programmed in a manner which enables at least a part of authorized data to be transferred to said second data carrier, said transfer being conditional on choices imposed by a human operator or by at least one enabling element (200) participating in said transaction, or a combination of the two, the existence and extent of said choices being determined by said first data carrier.

6. A method for effecting a transaction according to any one of the preceding claims, characterized in that said transaction is made conditional by signals which are external to said first and second data carriers and said interfacing circuit, the possibility of said transaction being conditional being determined by data in said operating program stored in said first carrier.

7. A method for effecting a transaction according to any one of the preceding claims, characterized in that said first carrier draws up a report of each transaction in which it has participated.

8. A method for effecting a transaction according to any one of the preceding claims, characterized in that use is made, as said second data carrier, of a plug-in carrier (3; 185; 297) provided with a microcircuit and authorized to receive data from at least one first carrier, and adapted to make the data that it has thus received secure, and to then be able to transfer or delegate, in its turn, a part of the data that it contains, said delegation being always subject to authorization contained in the data initially transferred from said first carrier and also being optionally subject to the control of a human operator and/or to the presence or absence of enabling signals, the extent of said control also being determined by the data initially transferred from said first data carrier.

9. A method according to any one of the preceding claims characterized in that it comprises the steps of:
- establishing a direct or indirect electrical contact with terminals of the microcircuit of said first plug-in carrier (5; 186; 296) having a microcircuit;
- establishing a direct or indirect electrical contact with terminals of the microcircuit of at least one second plug-in carrier (3; 185; 297), in order to establish a link, through said interfacing circuit (11), between said first and second microcircuits;
- running an identification and access algorithm on said first microcircuit;
- running an identification and access algorithm on said second microcircuit;
- transferring the data resulting from the running of said algorithms to said interfacing circuit (11);
- comparing, in said interfacing circuit (11), the results of the running of said algorithms by a method determined by said first plug-in carrier having a microcircuit;
- determining if a transaction is possible on the basis of the results of said comparison;
- sending, in the case where the transaction is recognized as being possible for both participants, possible activation signals to a means (7; 45; 181, 196; 300) for human intervention in said transaction from said first plug-in carrier having a microcircuit to said interfacing circuit (11) enabling a human operator to exercise a level of control over said communication means;
- carrying out a transfer of data still under the command of said first microcircuit between the two microcircuits of said carriers, said interfacing circuit (11) only participating in said transaction as an interface providing means between said carriers and as a means for two-way communication with a human operator or another signal source connected to said interfacing circuit.

10. A plug-in data carrier having a microcircuit comprising a plurality of dedicated memory regions comprising at least one region to which access is prohibited, a region holding accessible data, an identification region and a transaction region, characterized in that said carrier includes a region of data for controlling and managing the operation of an interfacing circuit, the data of said region being able to be copied from said carrier onto another carrier with which it is compatible, and a region containing data information able to be copied by access thereto by delegation.

11. A data carrier according to claim 10, characterized in that it includes a confidential zone to which access is obtainable by progressive coded steps.

12. A data carrier according to claim 10 or 11, characterized in that it includes a data zone containing information able to be transferred or acquired.

13. A data carrier according to any one of claims 10 to 12, characterized in that it includes a region containing program data which can be copied from said carrier to another carrier with which it is compatible.

14. A data carrier according to ant one of claims 10 to 13, characterized in that it includes a region containing program data which can be transferred from said carrier to another carrier with which it is compatible.

15. A device for carrying out a transaction between at least one first plug-in data carrier having a microcircuit and a second carrier according to the method of any one of claims 1 to 9, characterized in that it includes means (15, 15a′) for establishing a direct or indirect electrical contact with a first plug-in carrier (5; 186; 296) having a microcircuit and with at least one second carrier (3; 185; 297), an interfacing circuit (11) for said first data carrier and said second data carrier, means (14a; 14a′) for identifying said second carrier which respect to said first carrier, and means (11) allowing, totally under overall control of said first data carrier, a transfer of data from one of said carriers to the other carrier.

16. A device according to claim 15, characterized in that it includes display means (7; 45; 181; 196; 300) for displaying elements of information relative to said transaction and/or means enabling a human operator to intervene in said transaction.

17. A device according to claim 15, characterized in that the elements composing said display are generated by one of the microcircuit data carriers (5; 2) plugged-into said device.

18. A device according to any one of claim 15 to 17, characterized in that it includes a liquid crystals display adapted to be activated and supplied with information by one of said microcircuit data carriers (5; 2).

19. A device according to any one of claim 15, 16 or 17, characterized in that it includes a keyboard consisting of a touch sensitive screen, the display (8, 300) thereon being generated by the microcircuit data carrier (5).

20. A device according to any one of claims 15 to 19, characterized in that it includes a keyboard consisting of an external keyboard able to be connecting to said device (42) by means of a connector (47).

21. A device according to any one of claims 15 to 20, characterized in that it includes means for reading a magnetic stripe card (41).

22. A device according to claim 15, characterized in that said plug-in microcircuit data carrier (5, 2) consists of a keyboard (200) of a format substantially conforming to that of a standardized credit cart, being electrically powered by said device and able to control, partially or fully under the control of an operator, other elements in a system of which it constitutes a part.

23. A device according to claim 22, characterized in that said plug-in keyboard (200) includes at least one key carrying a pictogram that illustrates its function, said microcircuit including memory means enabling said keyboard to be customized for a specific application thereof.

24. A device enabling a transaction to be effected between at least one first data carrier and at least one second data carrier according to any one of claims 15 to 23, characterized in that it is associated with a connector (204, 212, 215) having or not having its own degree of intelligence, said connector (204, 212, 215) including at least one slot enabling a microcircuit data carrier to be introduce thereinto and allowing communication to be carried out between one at least of said carriers and a peripheral or an external system.

25. A device according to claim 24, characterized in that said connector carries a microcircuit (207) carrier (206) adapted to be plugged into a device according to any one of claims 15 to 23.

26. A device according to claim 24, characterized in that said intelligence is provided by means of the microcircuit carried on a part thereof (206) in the shape of a credit card.

27. A device according to claim 24, characterized in that said intelligence is provided by means of the microcircuit of a male element in the general shape of a credit card which is plugged into at least one slot (213, 216) provided on said connector.

28. A device according to any one of claims 24 to 27, characterized in that it includes an additional permanent or movable intelligence-providing data carrier which supplements or replaces said intelligence-providing means.

29. A device according to claim 15, characterized in that said plug-in microcircuit data carrier (220, 225) comprises means adapted to transmit and/or receive data to or from an external system without the intermediary of a physical link.

30. A device according to claim 29, characterized in that said plug-in microcircuit data carrier includes means (221, 222) enabling it to transmit and/or receive in the infra-red frequency range.

31. A device according to claim 29, characterized in that said plug-in microcircuit data carrier includes means (226, 227) adapted to receive and/or transmit in the high frequency radio-electric frequency range.

32. A device according to claim 24, characterized in that said external peripheral is an analyser (230) generally in the form of a probe capable of setting up a direct or indirect contact with the contacts of a microcircuit (223, figure 17; 237, figure 21).

33. A device according to claim 32, characterized in that said analyser is used with a centring guide ring (235) enabling the contacts of said microcircuit (223; 237) to be correctly addressed and adapted to be fixed onto said microcircuit (223, figure 17).

34. A device according to claim 15, characterized in that said plug-in microcircuit data carrier is in the general shape of a credit card (242) incorporating a microcircuit (243) provided at the upper and thereof with a housing (244) carrying a manual control device for a system to which said data carrier is connected.

35. A device according to claim 34, characterized in that said manual control device includes means (241; 243) enabling an authorized user to be recognized.

36. A device according to claim 15, characterized in that said plug-in microcircuit data carrier comprises a connector (245) in the general shape of a credit card (242) carrying a microcircuit (243) and having at the upper and thereof a housing (246) incorporating a circuit for presence detection.

37. A device according to claim 15, characterized in that said plug-in microcircuit data carrier comprises a connector (248) in the general shape of a credit card (242) incorporating a microcircuit (243) and having at the upper and thereof a housing (249) and allowing items of equipment (250; 251) for detecting, measuring and picking-up physical phenomena to be connected to said device.

## Patentansprüche

1. Transaktionsverfahren zwischen wenigstens einem ersten in eine Mikroschaltung einsteckbaren Datenträger (5; 186; 296), wobei der Datenträger von der Art ist, die geläufigerweise Speicherkarte oder Mikroprozessorkarte genannt wird, und wenigstens einem zweiten Datenträger, das wenigstens die Schritte der Herstellung der Verbindung zwischen den Trägern, des Lesens des ersten Trägers, des Erkennens der Kompatibilität des ersten Trägers mit dem zweiten Träger sowie des Übertregens von Daten von einem der Datenträger zum anderen über eine Schnittstellenleitung bzw. Schnittstellenschaltung (11) während einer Transaktion zwischen den ersten und zweiten Trägern umfaßt, dadurch gekennzeichnet, daß als erster Datenträger ein Mikroschaltungsträger (5; 186; 296) verwendet wird, der alle Erkennungs-, Steuer- und Verwaltungsdaten der Schnittstellenschaltung (11) und der Transaktion enthält.

2. Transaktionsverfahren zwischen wenigstens einem ersten Datenträger und wenigstens einem zweiten Datenträger nach Anspruch 1, dadurch gekennzeichnet, daß als zweiter Datenträger ebenfalls ein Träger (3; 185; 297) in Form eines in eine Mikroschaltung einsteckbaren Elements verwendet wird, der dazu geeignet ist, während einer Transaktion Daten nur in dem Fall zu empfangen, in dem der erste Datenträger dazu geeignet ist, ihm Daten zu senden, und daß die übertragenen Daten durch eine festgelegte Ermächtigung begrenzt werden können.

3. Transaktionsverfahren zwischen wenigstens einem ersten Datenträger und wenigstens einem zweiten Datenträger nach Anspruch 1, dadurch gekennzeichnet, daß als zweiter Datenträger ein Träger verwendet wird, der dazu geeignet ist, an die Schnittstellenschaltung (11) angeschlossen zu werden und der Teil eines von der Schnittstellenschaltung unabhängigen Systems ist.

4. Transaktionsverfahren nach einem der Ansprüche 1 bis 3, dadurch gekennzeichnet, daß als Schnittstellenschaltung ein Datenübertragungsmittel verwendet wird, das von Mitteln mit verschalteter Logik gesteuert wird, daß die Mittel mit verschalteter Logik ausschließlich von den Informationen des in dem ersten Datenträger (5; 186; 296) gespeicherten Basisprogramms gesteuert werden und daß die Funktionen der Schnittstellenschaltung auf den Zugriff auf die Datenbereiche der Mikroschaltungen begrenzt werden, wobei der Zugriff durch die Mittel zum Erkennen der Kompatibilität des ersten Datenträgers bewilligt wird.

5. Transaktionsverfahren nach einem der Ansprüche 1 bis 4, dadurch gekennzeichnet, daß der erste Datenträger derart programmiert wird, daß wenigstens ein Teil der bewilligten Daten zu dem zweiten Datenträger übertragen werden kann, und daß dieses Übertragen abhängig von einer Auswahl konditioniert wird, die entweder von einem menschlichen Bediener oder wenigstens einem an der Transaktion beteiligten Validierungselement oder einer Kombination von beiden vorgenommen wird, wobei das Vorhandensein und das Ausmaß der Auswahl durch den ersten Datenträger vorgegeben sind.

6. Transaktionsverfahren nach einem der vorstehenden Ansprüche, dadurch gekennzeichnet, daß die Transaktion durch Signale außerhalb der ersten und zweiten Datenträger und der Schnittstellenschaltung konditioniert wird, wobei die Möglichkeit einer derartigen Konditionierung durch die Informationen des in dem ersten Datenträger gespeicherten Basisprogramms gegeben ist.

7. Transaktionsverfahren nach einem der vorstehenden Ansprüche, dadurch gekennzeichnet, daß der erste Datenträger einen Bericht über jede Transaktion erstellt, in welche er eingreift.

8. Transaktionsverfahren nach einem der vorstehenden Ansprüche, dadurch gekennzeichnet, daß als zweiter Datenträger ein in eine Mikroschaltung einsteckbarer Träger (3; 185; 297) verwendet wird, der dazu geeignet ist, Daten von wenigstens einem ersten Datenträger zu empfangen, und in der Lage ist, die so empfangenen Daten zu sichern und seinerseits einen Teil der Daten, die er enthält, zu übertragen oder weiterzuleiten, wobei dieses Weiterleiten immer noch unter der Bewilligung der ursprünglich von dem ersten Datenträger übertragenen Daten steht und gegebenenfalls unter der Kontrolle eines menschlichen Bedieners und/oder der Anwesenheit oder Abwesenheit von Validierungssignalen stehen kann, und die Möglichkeiten der Kontrolle ebenfalls durch die ursprünglich übertragenen Daten festgelegt sind.

9. Verfahren nach einem der vorstehenden Ansprüche, dadurch gekennzeichnet, daß es die Schritte umfaßt:
- Herstellen eines direkten oder indirekten elektrischen Kontakts mit den Anschlüssen der Mikroschaltung des ersten in eine Mikroschaltung einsteckbaren Datenträgers (5; 186; 296),
- Herstellen eines direkten oder indirekten elektrischen Kontakts mit den Anschlüssen der Mikroschaltung wenigstens eines zweiten in eine Mikroschaltung einsteckbaren Datenträgers (3; 185; 297) um über die Schnittstellenschaltung (11) eine Verbindung zwischen den ersten und zweiten Mikroschaltungen herzustellen,
- Einleiten des Ablaufs eines Erkennungsalgorithmus und des Zugriffs auf die erste Mikroschaltung,
- Einleiten des Ablaufs eines Erkennungsalgorithmus und des Zugriffs auf die zweite Mikroschaltung,
- Übertragen von sich aus den Abläufen ergebenden Daten an die Schnittstellenschaltung (11),
- Vergleichen der Ergebnisse der Abläufe in der Schnittstellenschaltung (11) durch eine durch den ersten in eine Mikroschaltung einsteckbaren Datenträger festgelegte Methode,
- Feststellen, ob ausgehend von den Resultaten des Vergleichs eine Transaktion möglich ist,
- falls daß die Transaktion für diese beiden Partner als möglich erkannt wurde, Senden von eventuellen Aktivierungssignalen eines Mittels (7; 45; 181; 196; 300) zum menschlichen Eingriff in die Transaktion von dem ersten in eine Mikroschaltung einsteckbaren Träger zu der Schnittstellenschaltung (11), um Datenübertragungsmittel durch einen menschlichen Bediener zu steuern,
- Durchführen einer Datenübertragung zwischen den beiden Mikroschaltungen der Träger immer auf den Befehl der ersten Mikroschaltung, wobei die Schnittstellenschaltung (11) nur als Schnittstelle zwischen den beiden Trägern und als bidirektionales Datenübertragungsmittel mit einem menschlichen Bediener oder einer anderen mit der Schnittstellenschaltung verbundenen Signalquelle in die Transaktion eingreift.

10. Datenträger, der in eine Mikroschaltung einsteckbar ist und eine Vielzahl von dedizierten Speicherbereichen mit wenigstens einem für den Zugriff verbotenen Bereich, einem Bereich mit zugänglichen Daten, einem Erkennungsbereich und einem Transaktionsbereich umfaßt, dadurch gekennzeichnet, daß der Träger einen Befehls- und Steuerbereich für eine Schnittstellenschaltung umfaßt, der von dem Träger auf einen anderen Träger, mit dem er kompatibel ist, kopierbar ist, sowie einen Bereich für Informationsdaten, die dazu geeignet sind, durch Öffnen der Karte durch Weiterleiten kopiert zu werden.

11. Datenträger nach Anspruch 10, dadurch gekennzeichnet, daß er einen vertraulichen Bereich mit schrittweisem verschlüsseltem Zugriff umfaßt.

12. Datenträger nach Anspruch 10 oder 11, dadurch gekennzeichnet, daß er einen Bereich mit Informationsdaten umfaßt, die geeignet sind, übertragen oder empfangen werden zu können.

13. Datenträger nach einem der Ansprüche 10 bis 12, dadurch gekennzeichnet, daß er einen Bereich mit Programmdaten umfaßt, die von dem Träger zu einem anderen Träger, mit dem er kompatibel ist, kopierbar sind.

14. Datenträger nach einem der Ansprüche 10 bis 13, dadurch gekennzeichnet, daß er einen Bereich mit Programmdaten umfaßt, die von dem Träger zu einem anderen Träger, mit dem er kompatibel ist, übertragbar sind.

15. Vorrichtung zur Durchführung einer Transaktion zwischen wenigstens einem ersten in eine Mikroschaltung einsteckbaren Datenträger und einem zweiten Träger nach einem der Ansprüche 1 bis 9, dadurch gekennzeichnet, daß sie Mittel (15a, 15a′) zur Herstellung eines direkten oder indirekten elektrischen Kontakts zwischen einem ersten in eine Mikroschaltung einsteckbaren Datenträger (5; 186; 296) und wenigstens einem zweiten Träger (3; 185; 297), eine Schnittstellenschaltung (11) zwischen dem ersten Träger und dem zweiten Träger, Mittel (14a; 14a′) zur Erkennung des zweiten Trägers mit dem ersten Träger sowie Mittel (11) umfaßt, die es gestatten, gänzlich unter dem umfassenden Steuerbefehl des ersten Datenträgers eine Übertragung von Daten von einem der Datenträger zum anderen Träger durchzuführen.

16. Vorrichtung nach Anspruch 15, dadurch gekennzeichnet, daß sie ein Sichtbarmachungsmittel (7; 45; 181; 196; 300) zur Anzeige von Informationselementen, die die Transaktion betreffen, und/oder ein Mittel, das einem menschlichen Bediener gestattet, in die Transaktion einzugreifen, umfaßt.

17. Vorrichtung nach Anspruch 15, dadurch gekennzeichnet, daß die die Anzeige darstellenden Elemente von einem der in die Vorrichtung eingesteckten Träger (5, 2) mit Mikroschaltungen erzeugt werden.

18. Vorrichtung nach einem der Ansprüche 15 bis 17, dadurch gekennzeichnet, daß sie einen Flüssigkristallschirm umfaßt, der geeignet ist, von einem der Träger (5, 2) mit Mikroschaltung aktiviert und mit Informationen gespeist zu werden.

19. Vorrichtung nach einem der Ansprüche 15, 16 oder 17, dadurch gekennzeichnet, daß sie eine Tastatur umfaßt, die aus einem Berührungsbildschirm oder berührungsempfindlichen Bildschirm besteht, wobei die Anzeige (8, 300) von dem Mikroschaltungsträger (5) erzeugt wird.

20. Vorrichtung nach einem der Ansprüche 15 bis 19, dadurch gekennzeichnet, daß die Tastatur eine externe Tastatur ist, die mittels eines Verbindungsstücks (47) mit der Vorrichtung (42) verbunden werden kann.

21. Vorrichtung nach einem der Ansprüche 15 bis 20, dadurch gekennzeichnet, daß sie ein Mittel zum Lesen von magnetischen Karten (41) umfaßt.

22. Vorrichtung nach Anspruch 15, dadurch gekennzeichnet, daß der in eine Mikroschaltung einsteckbare Datenträger (5,2) aus einer Tastatur (200) besteht, deren Größe im wesentlichen einer normierten Kreditkarte entspricht, die ihre Versorgung von der Vorrichtung erhält und die in der Lage ist, unter der Betätigung eines Bedieners teilweise oder ganz andere Elemente eines Systems, mit dem sie verbunden ist, zu steuern.

23. Vorrichtung nach Anspruch 22, dadurch gekennzeichnet, daß die einsteckbare Tastatur (200) wenigstens eine Taste aufweist, die ein ihre Funktion darstellendes Piktogramm trägt, und die Mikroschaltung Mittel zum Speichern beinhaltet, die eine Personalisierung für eine spezifische Anwendung der Tastatur gestattet.

24. Vorrichtung zur Durchführung einer Transaktion zwischen wenigstens einem ersten in eine Mikroschaltung einsteckbaren Träger und einem zweiten Träger nach einem der Ansprüche 15 bis 23, dadurch gekennzeichnet, daß sie an ein Verbindungsstück (204, 212, 215) angeschlossen ist, das oder das nicht mit seinem eigenen Intelligenzniveau ausgestattet ist, wobei das Verbindungsstück (204, 212, 215) wenigstens einen Schlitz zum Einführen eines Trägers mit Mikroschaltung aufweist und eine Verbindung zwischen wenigstens einem der Träger und einer Peripherie oder einem externen System gestattet.

25. Vorrichtung nach Anspruch 24, dadurch gekennzeichnet, daß das Verbindungsstück mit einem Träger (206) mit Mikroschaltung (297) ausgestattet ist, der dazu geeignet ist in eine Vorrichtung nach einem der Ansprüche 15 bis 23 eingesteckt zu werden.

26. Vorrichtung nach Anspruch 24, dadurch gekennzeichnet, daß die Intelligenz mittels der Mikroschaltung verwirklicht wird, die in dem Abschnitt (206) mit der Form einer Kreditkarte angebracht ist.

27. Vorrichtung nach Anspruch 24, dadurch gekennzeichnet, daß die Intelligenz mittels der Mikroschaltung eines männlichen Elements in der Form einer Kreditkarte erhalten wird, die in wenigstens einen Schlitz (213; 216) des Verbindungsstücks eingesteckt ist.

28. Vorrichtung nach einem der Ansprüche 24 bis 27, dadurch gekennzeichnet, daß sie in fester oder beweglicher Weise einen Träger mit komplementärer Intelligenz aufweist, der die Intelligenzmittel ergänzt oder ersetzt.

29. Vorrichtung nach Anspruch 15, dadurch gekennzeichnet, daß der in eine Mikroschaltung (220, 225) einsteckbare Träger Mittel umfaßt, die dazu geeignet sind, ohne eine zwischengeschaltete materielle Verbindung Daten zu oder von einem externen System zu senden und/oder zu empfangen.

30. Vorrichtung nach Anspruch 29, dadurch gekennzeichnet, daß der einsteckbare Träger Mittel (221, 222) umfaßt, die ihm erlauben, im Bereich der Infrarotfrequenzen zu senden und/oder zu empfangen.

31. Vorrichtung nach Anspruch 29, dadurch gekennzeichnet, daß der einsteckbare Träger Mittel (226, 227) umfaßt, die in der Lage sind, im Bereich hochfrequenter Radiofrequenzen zu senden und/oder zu empfangen.

32. Vorrichtung nach Anspruch 24, dadurch gekennzeichnet, daß die externe Peripherie ein Analysator (230) in der allgemeinen Form einer Berührungsspitze ist, die in der Lage ist, mit den Kontakten einer Mikroschaltung (223 Figur 17; 237 Figur 21) einen direkten oder indirekten Kontakt herzustellen.

33. Vorrichtung nach Anspruch 32, dadurch gekennzeichnet, daß der Analysator mit einer Zentrierungshülse (235) verwendet wird, die eine gute Adressierung der Kontakte der Mikroschaltung (223; 237) gestattet und dazu geeignet ist, auf der Mikroschaltung (223 Figur 17) befestigt zu werden.

34. Vorrichtung nach Anspruch 15, dadurch gekennzeichnet, däß der in eine Mikroschaltung einsteckbare Träger die allgemeine Form einer Kreditkarte (242) aufweist und eine Mikroschaltung beinhaltet, die mit einem Gehäuse (244) versehen ist, das eine Vorrichtung zur manuellen Steuerung (242) eines Systems, mit dem es verbunden ist, umfaßt.

35. Vorrichtung nach Anspruch 34, dadurch gekennzeichnet, daß die Vorrichtung zur manuellen Steuerung (242) Mittel (241; 243) umfaßt, die die Wiedererkennung eines ermächtigten Benutzers gestatten.

36. Vorrichtung nach Anspruch 15, dadurch gekennzeichnet, daß der in eine Mikroschaltung einsteckbare Träger aus einem Verbindungsstück (245) besteht, das die allgemeine Form einer Kreditkarte (242) aufweist, eine Mikroschaltung (243) beinhaltet und mit einem Gehäuse (246) versehen ist, das Schaltungen zum Erfassen der Anwesenheit umfaßt.

37. Vorrichtung nach Anspruch 15, dadurch gekennzeichnet, daß der in eine Mikroschaltung einsteckbare Träger aus einem Verbindungsstück (248) besteht, das die allgemeine Form einer Kreditkarte (242) aufweist, eine Mikroschaltung (243) beinhaltet, mit einem Gehäuse (249) versehen ist und die Verbindung mit dem System von Vorrichtungen zur Erfassung, zur Messung und zur Aufnahme (250; 251) von physikalischen bzw. körperlichen Erscheinungen gestattet.
